(19) Europäisches Patentamt
European Patent Office
Office européen des brevets

(11) **EP 3 398 270 B1**

(12) **FASCICULE DE BREVET EUROPEEN**

(45) Date de publication et mention
de la délivrance du brevet:
**09.09.2020 Bulletin 2020/37**

(21) Numéro de dépôt: **16831623.0**

(22) Date de dépôt: **29.12.2016**

(51) Int Cl.:
*H04B 17/30* [(2015.01)] *H04B 10/07* [(2013.01)]
*H04L 9/08* [(2006.01)]

(86) Numéro de dépôt international:
**PCT/EP2016/082881**

(87) Numéro de publication internationale:
**WO 2017/114926 (06.07.2017 Gazette 2017/27)**

(54) **PROCEDE DE CODAGE UNIVOQUE ET SECRET DE TRANSMISSION SUR UN CANAL DE PROPAGATION A AVANTAGE DE CAPACITE**

VERFAHREN ZUR EINDEUTIGEN UND GEHEIMEN CODIERUNG ZUR ÜBERTRAGUNG ÜBER EINEN AUSBREITUNGSKANAL MIT KAPAZITÄTSVORTEIL

METHOD FOR UNAMBIGUOUS AND SECRET CODING FOR TRANSMISSION OVER A PROPAGATION CHANNEL WITH CAPACITY ADVANTAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2015 FR 1502710**

(43) Date de publication de la demande:
**07.11.2018 Bulletin 2018/45**

(73) Titulaires:
- **Thales**
  **92400 Courbevoie (FR)**
- **Institut Mines-Télécom**
  **75013 Paris (FR)**
- **Imperial College Of Science,**
  **Technology And Medicine**
  **Londres SW7 2AZ (GB)**

(72) Inventeurs:
- **KAMENI NGASSA, Christiane**
  **92622 Gennevilliers Cedex (FR)**
- **DELAVEAU, François**
  **92622 Gennevilliers Cedex (FR)**
- **BELFIORE, Jean-Claude**
  **75634 Paris Cedex 13 (FR)**
- **LING, Cong**
  **SW7 2AZ Londres (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A1-2015/144250**

- **TYAGI HIMANSHU ET AL: "Explicit capacity-achieving coding scheme for the Gaussian wiretap channel", 2014 IEEE INTERNATIONAL SYMPOSIUM ON INFORMATION THEORY, IEEE, 29 juin 2014 (2014-06-29), pages 956-960, XP032635488, DOI: 10.1109/ISIT.2014.6874974**
- **KHINA ANATOLY ET AL: "From ordinary AWGN codes to optimal MIMO wiretap schemes", 2014 IEEE INFORMATION THEORY WORKSHOP (ITW 2014), IEEE, 2 novembre 2014 (2014-11-02), pages 631-635, XP032694547, ISSN: 1662-9019, DOI: 10.1109/ITW.2014.6970908 [extrait le 2014-12-01]**
- **EMMANUEL ABBE ET AL: "Polar coding schemes for the AWGN channel", 2011 IEEE INTERNATIONAL SYMPOSIUM ON INFORMATION THEORY PROCEEDINGS (ISIT 2011) : ST. PETERSBURG, RUSSIA, 31 JULY - 5 AUGUST 2011, IEEE, PISCATAWAY, NJ, 31 juillet 2011 (2011-07-31), pages 194-198, XP031971556, DOI: 10.1109/ISIT.2011.6033892 ISBN: 978-1-4577-0596-0**

## Description

L'invention concerne un procédé permettant de construire un code secret univoque destiné à être utilisé pour des échanges de données entre un nœud et un terminal de communication, par exemple de radiocommunication. Ce procédé de codage des transmissions, univoque, secret, sans clé et sans canal auxiliaire, est destiné à être mis en œuvre sur un canal de propagation à avantage de capacité préétabli (CSU_CAC), afin de protéger, vis-à-vis d'un tiers non autorisé, des données échangées entre au moins un premier utilisateur et un deuxième utilisateur.

Les mécanismes de sécurité mis en œuvre dans des systèmes de communications reposent notamment sur l'utilisation de clés secrètes prédistribuées pour le chiffrement des données à sécuriser avant leur transmission. Dans de nombreux réseaux de transmission, notamment dans les réseaux de radiocommunications publics à marchés de masse mondial, cette façon de procéder présente des limites au vu des capacités de piratage et des « hackers » qui développent, soit des moyens capables de retrouver ou de modifier in situ les paramètres de chiffrement utilisés, soit des moyens de récupération des clés d'abonnés gérées par les opérateurs ou les fournisseurs d'équipements. Par exemple, le piratage récurrent de cartes SIM montre que l'utilisation de clés de chiffrement est insuffisante pour protéger les utilisateurs.

L'enseignement technique de Tyagi Himanshu et al, « Explicit capacity-achieving coding scheme for the Gaussian wiretap channel » 2014 IEEE International Symposium On Information Theory, IEEE, 29 juin 2014, pages 956-960, XP032635488, décrit un procédé dans lequel le secret est produit grâce à une fonction de hashing qui encapsule le codage correcteur (hashing dont le but est de distribuer sur tous les bits de Eve toute erreur de décodage que ferait Eve sur au moins un bit à l'instar d'une technique de « privacy amplification » classique).

L'enseignement technique de Khina Anatoly « From ordinary AWGN codes to optimal MIMO wiretap schemes » 2014 IEEE information theory workshop (ITW 2014), IEEE, 2 novembre 2014 (2014-11-02), pages 631-635, XP032694547, est une extension de la technique décrite dans le document précité de Tyagi Himanshu et al.

Dans son document intitulé « Polar coding schemes for the AWGN channel », 2011 IEEE International Symposium on Information Theory Proceedings (ISIT 2011) : St Petersburg, Russia, 31 July-5 August 2011, IEEE, Piscataway, NJ, 31 juillet 2011, pages 194-198, XP031971556, les auteurs Emmanuel Abbe et al, décrivent des codes polaires.

Le procédé selon l'invention a notamment pour objectif de générer des codes secrets de manière univoque, afin de coder des données échangées entre un premier utilisateur et un deuxième utilisateur, par exemple entre un nœud et un terminal d'un réseau de radiocommunication, sans distribution préalable de clé secrète, sans utilisation de canal auxiliaire, après établissement par le nœud et le terminal d'un avantage radio contrôlé par rapport à tous tiers non autorisés.

Le procédé repose notamment sur une implémentation spécifique d'un schéma de codage univoque et secret, combinant astucieusement un code externe et un code interne, offrant ainsi la sécurité et la fiabilité dans les transmissions de données. Dans la suite de la description, on utilise les abréviations suivantes, relatives aux signaux utiles notés $S_A$ émis par un ou plusieurs émetteurs d'au moins un utilisateur A et reçus par un ou plusieurs récepteurs d'au moins un utilisateur différent B :

CSU_CAC : canal de propagation à avantage de capacité,

$S_{A,dB}$ : puissance d'émission des signaux utiles par l'émetteur A, en décibels,

$I_{A,dB}$ : puissance d'émission de signaux d'interférence contrôlés par l'émetteur A, en décibels,

$N'_{B,dB}$ : puissance de bruit de réception pour chaque récepteur B, en décibels,

$L_{A->B,dB}$ : pertes de propagation lors de la transmission de A vers B,

$L_{B->A,dB}$ : pertes de propagation lors de la transmission de B vers A, le cas échéant,

$(SNR)_{A->B,dB}$ : rapport signal à bruit à la réception en B, après propagation de A vers B, en décibels, donné par

$(SNR)_{A->B,dB} = S_{A,dB} - L_{A->Bmax,dB} - N'_{B,dB}$,

$(SNR)_{A->Bmin,dB}$ : seuil a minima de rapport signal à bruit minimum à la réception en B, après propagation de A vers B, en décibels, considéré comme acceptable pour garantir le bon fonctionnement de la transmission,

$L_{A->Bmax,dB}$ : seuil des pertes de propagation fixé au-dessus de la limite de fonctionnement de la transmission de A vers B, c'est-à-dire réalisant le seuil a minima de rapport signal à bruit considéré comme acceptable pour le fonctionnement de la transmission $(SNR)_{A->Bmin,dB} = S_{A,dB} - L_{A->Bmax,dB} - N'_{B,dB}$,

$(SIR)_{A,dB} = S_{A,dB} - I_{A,dB}$ rapport signal à interférence à l'émission en A, en décibels,

$NR_B$ : niveau de réjection des interférences reçues en B par des traitements propres à A et B,

$(SINR)_{A->B,dB}$ : rapport signal à bruit plus interférence à la réception en B, après propagation de A vers B, en décibels,

$$(SINR)_{A->B,dB} = (S_{A,dB} - L_{A->B,dB}) - 10.\log_{10}(10^{((I_{A,dB} - NR_B - L_{A->B,dB})/10)} + 10^{(N'_{B,dB})/10)}), \qquad (1)$$

$$ARC_{dB} : \text{avantage radio de canal}, \quad ARC_{dB} = (SINR)_{A\text{->}B,dB} - (SIR)_{A,dB}, \quad (2)$$

$C_{sh}^{(AWGN)}(SINR_{dB})$ : capacité de Shannon d'un canal de propagation direct à bruit additif gaussien définie pour un rapport signal à bruit + interférence en réception $SINR_{dB}$ exprimé en dB, définie par :

$$C_{sh}^{(AWGN)}((SINR)_{dB}) = \log_2[1+10^{(SINRdB)/10}], \quad (3)$$

$C_{sh}^{(AWGN)}{}_{(A\text{->}B)}$ est définie entre A et B par :

$$C_{sh}^{(AWGN)}{}_{(A\text{->}B)} = C_{sh}^{(AWGN)}((SINR)_{A\text{->}B,dB}),$$

$AC^{(AWGN)}$ : avantage a minima de capacité induit en canal de propagation direct à bruit additif gaussien par la différence entre $(SINR)_{A\text{->}B,dB}$ et $(SIR)_{A,dB}$ et défini par :

$$AC^{(AWGN)}((SINR)_{A\text{->}B,dB} \; ; (SIR)_{A,dB}) =$$

$$C_{sh}^{(AWGN)}((SINR)_{A\text{->}B,dB}) - C_{sh}^{(AWGN)}((SIR)_{A,dB}), \quad (4)$$

$C_{sh}^{(général)}(SINR_{dB})$ : capacité de Shannon d'un canal de propagation général définie pour un rapport signal à bruit + interférence en réception $SINR_{dB}$ exprimée en dB, par :

$$C_{sh}^{(général)}(SINR_{dB}) = \text{Sup}_{codages\_SA}\{I(A;B), SINR_{dB}\},$$

notion connue de l'homme de métier qui représente la borne supérieure de l'information mutuelle $I(A;B)$ entre un émetteur A et un récepteur B, sous l'hypothèse d'un rapport signal à bruit + interférence égal à $SINR_{dB}$ au niveau de la réception en B, pour tous les codages possibles du signal utile $S_A$.
Entre A et B, $C_{sh}^{(général)}{}_{(A\text{->}B)}$ est définie par :

$$C_{sh}^{(général)}{}_{(A\text{->}B)} = C_{sh}^{(général)}((SINR)_{A\text{->}B,dB}), \quad (5)$$

Entre A et E, $C_{sh}^{(général)}{}_{(A\text{->}E)}$ est majorée par $C_{sh}^{(général)}(SIR_{A,dB})$, elle-même définie par :

$$C_{sh}^{(général)}(SIR_{A,dB}) = \text{Sup}_{codages\_SA}\{I(A;E), SIR_{A,dB}\}, \quad (6)$$

ce qui est la borne supérieure de l'information mutuelle $I(A;E)$ entre l'utilisateur A et le tiers E, sous l'hypothèse d'un rapport signal à bruit + interférence égal à $SIR_{A,dB}$ au niveau de la réception en E, pour tous les codages possibles du signal utile $S_A$,
$AC^{(général)}((SINR)_B \; ; (SIR)_A)$ : avantage a minima de capacité en canal général, induit par la différence entre $(SINR)_B$ et $(SIR)_A$, défini par :

$$AC^{(général)}((SINR)_{A\text{->}B,dB} \; ; (SIR)_{A,dB}) =$$

$$C_{sh}^{(général)}(SINR_{A\text{->}B,dB}) - C_{sh}^{(général)}(SIR_{A,dB})_{dB}. \quad (7)$$

L'invention concerne un procédé de codage univoque des transmissions de données sur un canal de propagation à avantage de capacité, entre un premier utilisateur A comportant au moins un émetteur et un deuxième utilisateur B comportant au moins un récepteur, les données étant supportées par un signal utile transmis par A, $S_A$, caractérisé en ce qu'il comporte au moins les étapes suivantes :

a) définir préalablement pour chaque utilisateur, le paramètre de rapport signal à interférence à l'émission minimal

$(SINR)_{A\text{->}Bmin,dB}$ et le paramètre rapport signal à bruit + interférence à l'émission $(SIR)_{A,dB}$,

b) mesurer au niveau des récepteurs les signaux utiles provenant de chaque émetteur (16e) et déterminer la valeur du rapport signal à bruit plus interférence en réception correspondant, $(SINR)_{A\text{->}B,dB}$,

c) Lorsque $(SINR)_{A\text{->}B,dB} \geq (SINR)_{A\text{->}Bmin,dB}$ évaluer l'avantage radio de canal ARC par :

$$ARC_{dB} = (SINR)_{A\text{->}B,dB}.\text{-}(SIR)_{A,dB}$$

puis, lorsque $ARC_{dB} \geq 0$, évaluer la capacité de transmission dudit canal de transmission $C_{sh}^{(AWGN)}$ et l'avantage de capacité $AC^{(AWGN)}$ induit en canal gaussien par les formulations ci-dessous:

$$C_{sh}^{(AWGN)}((SINR)_{A\text{->}B,dB}) = \log_2[1+10^{((SINR)A\text{->}B,dB)/10}]$$

$$AC^{(AWGN)}((SINR)_{A\text{->}B,dB} ; (SIR)_{A,dB}) =$$
$$C_{sh}^{(AWGN)}((SINR)_{A\text{->}B,dB}) - \log_2[1+10^{((SIR)A,dB)/10}],$$

d) Lorsque $(SINR)_{A\text{->}B,dB} \geq (SINR)_{A\text{->}Bmin,dB}$ évaluer l'avantage radio de canal ARC par :

$$ARC_{dB} = (SINR)_{A\text{->}B,dB}.\text{-}(SIR)_{A,dB}$$

puis, lorsque $ARC_{dB} \geq 0$, évaluer la capacité de transmission d'un canal général $C_{sh}^{(général)}$ et de l'avantage de capacité $AC^{(general)}$ induit dans un canal quelconque par les formulations ci-dessous :

$$C_{sh}^{(général)}((SINR)_{A\text{->}B,dB}) = \text{Sup}_{codages\_SA}\{I(A;B), SINR_{A\text{->}B,dB}\},$$

qui est la borne supérieure de l'information mutuelle $I(A;B)$ entre le premier utilisateur A et le deuxième utilisateur B sous l'hypothèse d'un rapport signal à bruit + interférence égal à $SINR_{A\text{->}B,dB}$ au niveau de la réception en B, pour tous les codages possibles du signal utile $S_A$,

$$C_{sh}^{(général)}(SIR_{A,dB}) = \text{Sup}_{codages\_SA}\{I(A;E), SIR_{A,dB}\},$$

qui est la borne supérieure de l'information mutuelle $I(A;E)$ entre le premier utilisateur A et le tiers E sous l'hypothèse d'un rapport signal à bruit + interférence égal à $SIR_{A,dB}$ au niveau de la réception en E, pour tous les codages possibles du signal utile $S_A$,

puis

$$AC^{(général)}((SINR)_{A\text{->}B,dB} ; (SIR)_{A,dB}) =$$
$$C_{sh}^{(général)}(SINR_{A\text{->}B,dB}) - C_{sh}^{(général)}(SIR_{A,dB})_{dB},$$

e) si l'avantage de capacité est positif en canal gaussien $AC^{(AWGN)}((SINR)_{A\text{->}B,dB} ; (SIR)_{A,dB})> 0$ ou en canal général $AC^{(général)}((SINR)_{A\text{->}B,dB} ; (SIR)_{A,dB}) > 0$, alors sélectionner un codage interne $C_{int}$ de longueur en entrée $N_{int,E}$ de longueur en sortie $N_{int,S}$ adapté à corriger des erreurs de transmission, et un codage externe $C_{ext}$ de longueur en entrée $N_{ext,E}$ de longueur en sortie $N_{ext,S}$ vérifiant $N_{ext,S} \leq N_{int,E}$ et adapté à la protection des bits sélectionnés,

f) sélectionner au niveau des utilisateurs A et B un ensemble de bits de données à protéger,

g) formater et coder de manière univoque, au niveau de chaque utilisateur, des bits de transmission sélectionnés, en appliquant à l'émission la concaténation du code externe $C_{ext}$ et du code interne $C_{int}$, en complétant à l'émission, lorsque $N_{ext,S} < N_{int,E}$ chaque mot en sortie du code externe $C_{ext}$ par des bits arbitraires prédéfinis et sans valeur informative en nombre $N_{ext,S} - N_{int,E}$, pour constituer des mots de longueur $N_{int,E}$ adaptée à l'entrée du code interne $C_{int}$,

h) utiliser les données numériques issues de la concaténation des codes $C_{ext}$ et $C_{int}$ pour réaliser la transmission des données,

Le procédé utilise, par exemple, un codage externe de longueur en entrée $N_{ext,E}$ constitué de deux codes imbriqués $c_b$ et $c_e$, $c_e$ étant un sous-code de $c_b$, de débits de sortie respectifs $\eta_b$ et $\eta_e$ avec ($\eta_b \geq \eta_e$), de rendements respectifs $R_b$ et $R_e$ avec ($R_b \geq R_e$), lesdits codes étant adaptés de manière :

- à vérifier les relations suivantes en canal gaussien :

$$\eta_b \leq C_{sh}^{(AWGN)}((SINR)_{A\text{->}B,dB})$$
$$\eta_b - \eta_e \geq AC^{(AWGN)}((SINR)_{A\text{->}B,dB} \; ; (S_{IR})_{A,dB}),$$

- à vérifier les relations suivantes en canal général :

$$\eta_b \leq C_{sh}^{(général)}((SINR)_{A\text{->}B,dB})$$
$$\eta_b - \eta_e \geq AC^{(général)}((SINR)_{A\text{->}B,dB} \; ; (S_{IR})_{A,dB}),$$

- à produire un flux binaire protégé en sortie de débit $(R_b - R_e)*N_{ext,E}$.

Les bits de données à coder, peuvent être déterminés par les étapes suivantes :

- Classer les $N_{ext,E}$ entrées du code externe $C_{ext}$ en fonction d'un critère caractérisant leur facilité de décodage,
- Envoyer des bits aléatoires sans valeur d'information sur les $R_e*N_{ext,E}$ meilleures entrées du code externe $C_{ext}$,
- Envoyer les bits contenant l'information à protéger sur les $(R_b-R_e)*N_{ext,E}$ entrées suivantes,
- Envoyer des bits prédéfinis sur les entrées restantes.

et le critère utilisé peut être la capacité symétrique des entrées ou leur paramètre de Bhattacharyya ou leur poids de Hamming ou tout autre paramètre caractérisant la facilité ou la difficulté de leur décodage.

L'étape a) pour définir des paramètres radio peut comporter une étape d'étalonnage préalable et un ajustement de la valeur de l'avantage radio ARC selon les étapes suivantes :

- Définir préalablement pour chaque émetteur de l'utilisateur A des niveaux de puissance d'émission des signaux utiles $S_{A,dB}$ et des niveaux d'interférence contrôlés $I_{A,dB}$ de ces signaux utiles par d'autres signaux émis en même temps que ceux-ci, ces rapports de niveaux étant gérés par un rapport signal à interférence à l'émission, $(SIR)_{A,dB} = S_{A,dB} - I_{A,dB}$,
- Etalonner préalablement les niveaux de bruit de réception pour chaque récepteur de l'utilisateur B, $N'_{B,dB}$,
- Pour chaque émetteur et chaque récepteur, étalonner préalablement les niveaux des pertes de propagation de A vers B, $L_{A\text{->}B,dB}$ s'appliquant aux signaux utiles $S_{A,dB}$ et aux interférences contrôlées $I_{A,dB}$, définir un seuil maximal $L_{A\text{->}Bmax,dB}$ de ces pertes permettant une transmission de bonne qualité de A vers B,
- Pour chaque émetteur et chaque récepteur, étalonner préalablement les niveaux de rapport signal à bruit + interférence à la réception en B $(SINR)_{A\text{->}Bmin,dB}$ pour le seuil de pertes de propagation de A vers B $L_{A\text{->}Bmax,dB}$, pour les émissions par A des signaux utiles $S_{A,dB}$ et des interférences contrôlées $I_{A,dB}$ et pour les traitements appliqués sur les signaux $S_A$ en émission par A et en réception par B,
- Pour chaque émetteur et chaque récepteur, on utilise pour avantage radio, l'avantage radio a minima :
  - ■

$$ARC_{dB} = ARC_{min,dB} = (SINR)_{A\text{->}Bmin,dB}.- (SIR)_{A,dB}.$$

L'étape b) peut être exécutée en utilisant directement les sorties des traitements appliqués par chaque récepteur de B pour les besoins propres à la qualité de réception et de démodulation des signaux émis par chaque émetteur de A.

L'utilisateur B est muni de capacités d'émission qui lui sont propres, et l'utilisateur A est muni de capacités de réception qui lui sont propres, B transmet à A la valeur du rapport signal à bruit plus interférence en réception qu'il mesure, $(SINR)_{A\text{->}Bmesuré,dB}$, et A et B prennent pour valeur de l'avantage radio la valeur issue des mesures de B, soit :

$$ARC_{dB} = ARC_{mesuré,dB} = (SINR)_{A\text{->}Bmesuré,dB} - (SIR)_{A,dB}$$

Selon une variante, l'utilisateur A transmet à l'utilisateur B sur un canal public le nombre de bits protégés en réception, sans divulguer aucune information sur la valeur des bits protégés, selon l'avantage de capacité canal qu'il estime en fonction de ses ajustements du paramètre $(SIR)_{A,dB}$ et des valeurs du paramètre $(SINR)_{A->Bmesuré,dB}$ que B lui retourne.

Le code interne un code correcteur adapté à des canaux de propagation à évanouissement et bruités est choisi, par exemple, parmi la liste suivante : BCH, LDPC, RS, TC, Codes Convolutifs.

Pour la transmission de données, les utilisateurs échangent selon un mode Duplex Temporel employant une même fréquence porteuse pour leurs échanges en émission et en réception dans les deux sens de transmission ou selon un mode Duplex fréquentiel employant des fréquences porteuses différentes pour leurs échanges en émission et en réception selon le sens de transmission.

Les signaux mis en œuvre par le procédé peuvent être des signaux émis et reçus dans le cadre d'un protocole de bruit artificiel $N_A$ et formation de faisceau FF depuis un émetteur vers un récepteur, avec les définitions et formulations suivantes :

- $S_{A,dB}$ : puissance d'émission des signaux utiles par l'émetteur de A,
- $N_{A,dB}$ : puissance d'émission de signaux de bruit artificiel par l'émetteur A,
- $L_{A->B,dB}$ : pertes de propagation lors de la transmission de A vers B,
- $N'_{B,dB}$ : niveau de bruit en réception de B,
- $NR_{B,dB}$ : niveau de réjection du bruit artificiel en B par des traitements de formation de faisceau appliqués par A,
- $(SIR)_{A,dB}$ est alors le rapport entre le signal utile et bruit artificiel $N_A$ généré par l'émetteur, $(SIR)_{A,dB}$ donné par :

$$(SIR)_{A,dB} = S_{A,dB} - N_{A,dB},$$

- $(SINR)_{A->B,dB}$ est le rapport entre le signal utile $S_A$ et les bruit + interférence résiduelle en réception par l'utilisateur B après application de la formation de faisceau FF par A. $(SINR)_{A->B,dB}$ est donné par :

$$(SINR)_{A->B,dB} = (S_{A,dB} - L_{A->B,dB})$$
$$- 10.\log_{10}(10^{((NA,dB - NRB,dB - LA->B,dB)/10)} + 10^{(N'B,dB)/10}),$$

- L'avantage radio intrinsèque a minima de l'utilisateur B pour la réception de $S_A$ est alors :

$$ARC = (SINR)_{A->B,dB} - (SIR)_{A,dB}.$$

Le procédé peut s'appliquer des signaux émis et reçus dans le cadre d'un protocole à émission et réception simultané de type Full Duplex, ledit protocole émission et réception simultané procurant l'avantage de capacité relativement à un tiers E selon les définitions données plus loin dans la description.

Les signaux peuvent être des signaux de d'interrogation et d'acquittement, publics ou non, furtifs ou non, auto-interférés ou non, émis et reçus dans le cadre d'un protocole d'identification de systèmes d'émission réception ou dans le cadre d'un protocole d'authentification d'utilisateurs d'un tel système ou dans le cadre d'un protocole de contrôle d'intégrité des messages émis et reçus par un tel système, lesdits protocoles procurant l'avantage de capacité du canal de transmission selon les définitions et formulations explicités plus loin dans la description.

Les étapes du procédé selon l'invention sont, par exemple, renouvelées, d'une transmission à l'autre et renouvelées régulièrement au cours d'une même transmission lorsqu'un contrôle de puissance est appliqué par le premier utilisateur A ou le deuxième utilisateur B ou lorsque la transmission de A vers B gère par adaptation de débit des fluctuations des pertes de transmissions $L_{A->B,dB}$, avec le recalcul des codes secret à chaque nouvelle transmission et à chaque nouveau message en fonction du contrôle de puissance et des fluctuations de propagation et des adaptations de débit éventuelles.

L'invention concerne aussi un dispositif de codage univoque des transmissions de données sur un canal de propagation à avantage de capacité, entre au moins un premier utilisateur A et au moins un deuxième utilisateur B, un utilisateur comportant au moins un émetteur et un récepteur, les données transmises étant supportées par un signal utile, $S_A$ émis par A dans le sens A->B, $S_B$, émis par B dans le sens B->A, caractérisé en ce que chaque utilisateur comporte au moins une unité de calcul adaptée à exécuter les étapes du procédé selon l'invention.

D'autres caractéristiques et avantages de la présente invention apparaîtront mieux à la lecture de la description qui suit d'exemples donnés à titre illustratif et nullement limitatif annexée des figures qui représentent :

- Figure 1, un schéma d'échanges d'informations entre deux utilisateurs A (Alice) et B (Bob), en présence d'un tiers étranger E (Eve) non autorisé à connaître le contenu des données échangées entre A et B,
- Figure 2, une représentation des effets d'un canal de propagation dispersif sur la transmission des signaux depuis un émetteur A vers un récepteur autorisé B et vers un récepteur non autorisé E, et
- Figure 3, un exemple de succession des étapes mises en œuvre selon le procédé.

Afin de mieux faire comprendre le procédé selon l'invention, l'exemple est donné dans le cas d'un échange entre un premier utilisateur émetteur/récepteur A (Alice) et un deuxième utilisateur émetteur/récepteur B (Bob), en présence d'un récepteur tiers E (Eve) non autorisé, susceptible d'intercepter les communications et d'accéder au contenu des données échangées entre A et B.

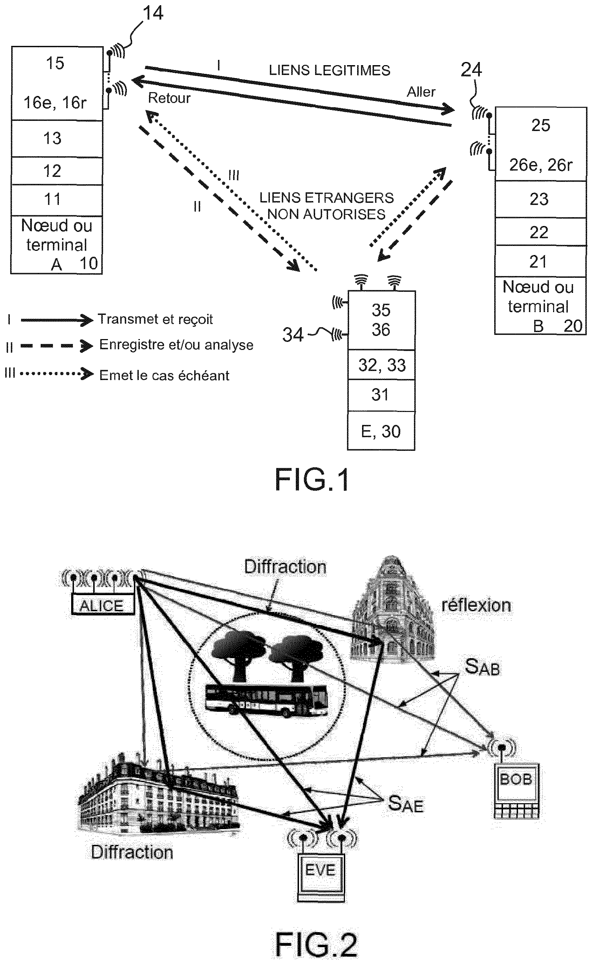

La figure 1 illustre un scénario de communication entre un premier émetteur/récepteur A, 10 et un deuxième émetteur/récepteur B, 20 en présence d'un récepteur tiers non autorisé E, 30. Les communications entre A et B sont des liens légitimes I, le tiers non autorisé E est susceptible d'enregistrer et/ou d'analyser des communications II, et d'émettre III le cas échéant.

L'émetteur/récepteur A est, par exemple, un nœud ou un terminal d'un réseau de communication comportant une unité de calcul 11, un module de codage/décodage 12, un module de démodulation 13, un module composé d'antennes 14, un ensemble de filtres 15, des moyens d'émission et réception radio 16e, 16r. Ces éléments sont connus de l'homme du métier et ne seront pas détaillés. L'objet de l'invention concerne la génération d'un code secret univoque qui sera utilisé pour coder de manière univoque la transmission des données échangées entre A et B.

De même, l'émetteur/récepteur B, 20, comporte, par exemple, une unité de calcul 21, un module de codage/décodage 22, un module de démodulation 23, un module composé d'antennes 24, de filtres 25, de moyens d'émission et réception radio 26e, 26r.

Le récepteur tiers non autorisé E, 30, comporte une unité de calcul 31, un enregistreur de données 32 et un module d'analyse 33 de signaux transmis au sein du réseau de communication, un bloc d'antennes 34, de filtres 35 et de moyens de réception radio 36.

La figure 2 schématise un exemple de canaux de propagation existants dans un système de communication. Dans des environnements extérieurs ou intérieurs, les formes d'ondes transmises de l'émetteur A vers le récepteur B et vers le tiers E suivent des parcours à trajets multiples. Les signaux peuvent être réfléchis par des obstacles avec différents angles de réflexion. Les signaux $S_{AB}$ empruntant les chemins de propagation de A vers B sont reçus par Bob avec le rapport signal à bruit + interférence $SINR_{A\rightarrow B,dB}$ défini précédemment par l'équation (1), alors que les signaux $S_{AE}$ empruntant les chemins de propagation de A vers E sont reçus par le tiers non autorisé E avec un rapport signal à bruit + interférence $SINR_{A\rightarrow E,dB}$ majoré par le rapport $SIR_{A,dB}$ défini plus haut.

Du simple fait de l'éloignement et de la complexité de la propagation, et de la diffraction des ondes entre A et B et entre A et E, le tiers E peut se trouver fréquemment dans une situation où la capacité de Shannon du canal entre A et E, $C_{sh}^{(général)}{}_{(A\rightarrow E)}$, majorée par $C_{sh}^{(général)}(SIR_{A,dB})$, est inférieure à celle du canal de propagation utilisé entre l'émetteur A et le récepteur B pour communiquer, soit $C_{sh}^{(général)}((SINR)_{A\rightarrow B,dB})$ définie plus haut, par la formule (3) en canal gaussien, par la formule (5) en canal général, ce qui induit un avantage de capacité a minima :

- en canal gaussien $AC^{(AWGN)} \geq AC^{(AWGN)}((SINR)_{A\rightarrow B,dB}; (SIR)_{A,dB})$ selon la formulation (4) définie plus haut,
- en canal général $AC^{(général)} \geq AC^{(général)}((SINR)_B; (SIR)_A)$ selon la formulation (7) définie plus haut.

Via la mise œuvre par l'émetteur A d'un procédé de bruit artificiel $(N_A)$ de niveau $N_{A,dB}$ en décibels et d'un procédé de formation de faisceau (FF) vers B, procurant une capacité de réjection $NR_{B,dB}$ des interférences induites par ledit bruit artificiel reçues au niveau $N_{A,dB} - L_{A\rightarrow B,dB}$ après propagation entre A et B, un avantage radio intrinsèque ARC peut être établi vis-à-vis de tout tiers E non colocalisé avec B, c'est-à-dire une situation où la capacité de Shannon du canal entre A et E, $C_{sh}^{(AWGN)}{}_{(A\rightarrow E)}$ ou $C_{sh}^{(général)}{}_{(A\rightarrow E)}$, est systématiquement inférieure de manière contrôlée par A et B à celle du canal de propagation utilisé entre l'émetteur A et le récepteur B pour communiquer $C_{sh}^{(AWGN)}{}_{(A\rightarrow B)}$ ou $C_{sh}^{(général)}{}_{(A\rightarrow B)}$, en raison du bruit artificiel pleinement subi par E, mais atténué pour B du niveau de réjection $NR_{B,dB}$.

Selon les définitions et formulations précédentes, le rapport signal à interférence à l'émission en A est alors $(SIR)_{A,dB} = S_{A,dB} - N_{A,dB}$, et le rapport signal à bruit plus interférence à la réception $(SINR)_{A\rightarrow B,dB}$ est toujours défini par la formule (1), en prenant $I_{A,dB} = N_{A,dB}$.

Finalement, A et B obtiennent après formation de faisceau de A sur B :

- un avantage radio a minima $ARC_{dB} \geq (SINR)_{A\rightarrow B,dB} - (SIR)_{A,dB}$,
- un avantage de capacité à minima :

  - en canal additif gaussien : $AC \geq AC^{(AWGN)}((SINR)_{A\rightarrow B,dB}; (SIR)_{A,dB})$
  - en canal général : $AC \geq AC^{(général)}((SINR)_{A\rightarrow B,dB}; (SIR)_{A,dB})$.

Lorsque la formation de faisceau est efficace, le terme $NR_{B,dB}$ tend vers moins l'infini, le terme $SINR_{A->B,dB}$ défini selon (1) tend vers $SNR_{A->B,dB}$, ce qui est une valeur supérieure à la valeur $SNR_{A->Bmin,dB}$ étalonnée par A et B pour les pertes de propagation maximales acceptables $L_{A->Bmax,dB}$. Les paramétrages de $S_A$ et $N_A$ étant réalisés pour que $SNR_{A->Bmin,dB}$ soit significativement plus grand que $SIR_{A,dB}$, on garantit de ce fait un avantage de capacité important à l'avantage de B par rapport à tout tiers E non colocalisé avec B.

Les mesures des signaux pour la mise en œuvre du procédé sont réalisées par les récepteurs des utilisateurs et l'unité de calcul d'un utilisateur est adaptée à traiter les données mesurées et à générer le code secret univoque.

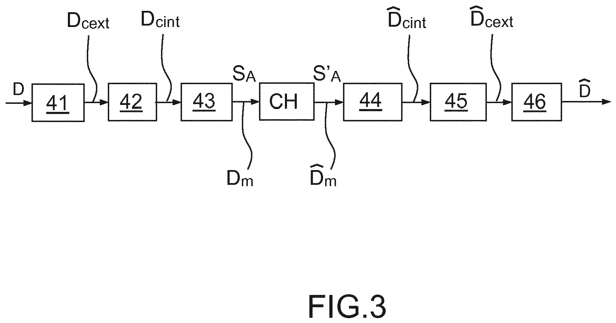

La figure 3 schématise un exemple d'enchaînement des étapes mises en œuvre par le procédé selon l'invention.

Les données à transmettre D sont transmises dans un premier codeur « externe » 41 (code externe), les données codées $D_{cext}$ sont ensuite transmises vers un codeur interne 42 (code interne), les données résultant $D_{int}$ du deuxième codage sont ensuite transmises à un modulateur de signal 43, qui produit le signal $S_A$ ($D_m$) envoyé sur le canal radio CH.

Les données utiles codées sont supportées par le signal modulé utile $S_A$ issu de l'émetteur A et transmis dans un canal de propagation à avantage de capacité. En réception après propagation dans le canal de A vers B, les signaux modulés $S_A$ atténués des pertes de propagation $L_{A->B,dB}$ sont démodulés par un démodulateur 44, puis les données démodulées sont décodées par le décodeur du code interne 45, $\hat{D}_{cint}$, et ensuite par le décodeur du deuxième code externe 46, $\hat{D}_{cext}$ afin d'obtenir les données décodées $\hat{D}$.

Le procédé de codage secret et univoque des transmissions sur un canal de propagation à avantage de capacité CSU_CAC comporte, par exemple, les étapes qui vont être décrites ci-après.

Une première phase consiste en des étalonnages préalables pour chaque paire (émetteur A, récepteur B).

Etape a), les émetteurs 16e, 26e et les récepteurs 16r, 26r de chaque utilisateur A, B, conviennent de niveaux de puissance d'émission des signaux utiles $S_{A,dB}$ et des niveaux d'interférences $I_{A,dB}$ contrôlés de ces signaux utiles par d'autres signaux émis simultanément. Ces rapports de niveaux sont gérés par un rapport signal à interférence $(SIR)_{A,dB}$ exprimé par $(SIR)_{A,dB} = S_{A,dB} - I_{A,dB}$.

Ces émetteurs et récepteurs étalonnent préalablement les niveaux de bruit de réception en B, en décibels $N_{B,dB}$, et les niveaux de rapport signaux à bruit minimaux $(SNR)_{A->Bmin,dB}$ pour le fonctionnement de la transmission.

Ils étalonnent aussi, préalablement, les niveaux des pertes de propagation de A vers B, en décibels $L_{A->B,dB}$, s'appliquant aux signaux utiles $S_{A,dB}$, aux interférences contrôlées $I_{A,dB}$, et ils définissent un seuil $L_{A->Bmax,dB}$ de ces pertes correspondant à la limite de fonctionnement de la transmission de A vers B, c'est-à-dire vérifiant :

$$(SNR)_{A->Bmin,dB} = S_{A,dB} - L_{A->Bmax,dB} - N'_{B,dB} .$$

Ils étalonnent de même, préalablement, les niveaux de rapport signal à bruit + interférence à la réception en B $(SINR)_{A->Bmin,dB}$ pour le seuil maximal de pertes de propagation de A vers B, en décibels $L_{A->Bmax,dB}$.

Une deuxième phase est relative aux mesures et évaluations in situ pour chaque paire (émetteur, récepteur). Etape b), les récepteurs 26r mesurent les signaux utiles $S_A$ (émis par 16e), puis évaluent le rapport signal à bruit plus interférence à la réception $(SINR)_{A->B,dB}$.

Etape c), A et B évaluent ensuite l'avantage radio de canal ARC, pour le canal entre A et B, en utilisant les formules (1) et (2) précitées. Puis A et B évaluent, pour le canal entre A et B, la capacité de transmission du canal suivant le SINR reçu par B, $C_{sh}^{(AWGN)}((SINR)_{A->B,dB})$, et l'avantage de capacité $AC^{(AWGN)}$ induit en canal gaussien par les formulations (3) et (4) précitées. Puis, A et B évaluent ensuite la capacité de transmission du canal $C_{sh}^{(général)}$ et de l'avantage de capacité $AC^{(general)}$ induit dans un canal quelconque, par les formulations (5) (6) et (7) précitées.

Etape d), le procédé va ensuite tester si l'avantage de capacité de canal est positif ou négatif et définir un codage en conséquence lorsqu'il est positif. Lorsque l'avantage de capacité est positif, i.e. $ARC_{dB} > 0$, $AC^{(AWGN)}_{dB} > 0$, $AC^{(général)}_{dB} > 0$, chaque utilisateur A, B sélectionne :

- un codage interne $C_{int}$ de longueur $N_{int}$ ayant pour fonction de corriger des erreurs de transmission, approchant la capacité de Shannon,
- un codage externe $C_{ext}$ de longueur $N_{ext}$ approchant la capacité de Shannon $C_{sh}^{(général)}$, destiné à protéger des bits sélectionnés.

Le codage externe $C_{ext}$ est constitué de deux codes imbriqués $c_b$ et $c_e$, $c_e$ étant un sous-code de $c_b$, de débits de sortie respectifs $\eta_b$ et $\eta_e$, avec ($\eta_b \geq \eta_e$), de rendements respectifs $R_b$ et $R_e$ avec ($R_b \geq R_e$), les codes étant ajustés de manière à vérifier les relations suivantes :
en canal gaussien :

$$\eta_b \leq C_{sh}^{(AWGN)}((SINR)_{A\text{->}B,dB}) \qquad (8)$$

$$\eta_b - \eta_e \geq AC^{(AWGN)}((SINR)_{A\text{->}B,dB} ; (SIR)_{A,dB}) \qquad (9)$$

en canal général :

$$\eta_b \leq C_{sh}^{(général)}((SINR)_{A\text{->}B,dB}) \qquad (10)$$

$$\eta_b - \eta_e \geq AC^{(général)}((SINR)_{A\text{->}B,dB} ; (SIR)_{A,dB}). \qquad (11)$$

Etape e), à partir du code interne $C_{int}$ et du code externe $C_{ext}$, le procédé va ensuite définir des bits de transmission à protéger. Pour cela, l'utilisateur A sélectionne de manière univoque un ensemble de bits de transmission à protéger $\{b_1,... b_m\}$, suivant la méthode décrite ci-après :

- Classer les $N_{ext}$ entrées du code externe $C_{ext}$ en fonction d'un critère caractérisant leur facilité de décodage. Ce critère peut être leur capacité symétrique ou le paramètre de Bhattacharyya ou le poids de Hamming ou tout autre paramètre caractérisant la facilité ou la difficulté de leur décodage,
- Envoyer des bits aléatoires sur les $R_e*N_{ext}$ meilleures entrées du code externe $C_{ext}$, au sens de la facilité de décodage, que Bob et Eve peuvent décoder,
- Envoyer les bits contenant l'information à protéger sur les $(R_b - R_e)*N_{ext}$ entrées suivantes, au sens du critère de facilité de décodage, que Bob peut décoder mais que Eve ne peut pas décoder,
- Envoyer des bits prédéfinis sans valeur informative sur les entrées restantes.

Etape f), chaque utilisateur A, B, va ensuite formater et coder de manière univoque des bits de transmission (un ensemble de bits $b_1,..,b_m$), en appliquant à l'émission des données le classement précédent, le code externe $C_{ext}$, puis le code interne $C_{int}$, sur les données à transmettre,

Etape g), chaque utilisateur A, B, va utiliser des données numériques issues de ce codage concaténé pour communiquer. Cette utilisation est univoque et secrète, ladite univocité provenant de la correction d'erreur appliquée lors du codage, ledit secret provenant du fait que le code externe provoque un taux d'erreur en décodage des bits protégés proche de 50 pourcents pour tout tiers ne disposant pas de l'avantage de capacité.

Selon une variante de réalisation, pour l'étape b), l'utilisateur A transmet à B sur un canal public le nombre de bits protégés en réception (sans divulguer aucune information sur la valeur des bits protégés) selon l'avantage de capacité canal qu'il estime, et inversement lorsque B est muni de capacité d'émission et A de capacité de réception.

Selon une variante de réalisation, l'étape b) est mise en œuvre en exploitant directement les sorties des traitements appliqués par les récepteurs de chaque utilisateur pour les besoins propres à la qualité de réception et démodulation des signaux émis par les autres utilisateurs et au contrôle de cette qualité.

Selon une variante de réalisation, le schéma de codage concaténé utilise comme code interne $C_{int}$, des codes correcteurs classiques, efficaces dans des canaux de propagation bruités, par exemple de type BCH, LDPC, RS, TC, Code Convolutif. Pour le code externe $C_{ext}$, des codes correcteurs pouvant atteindre la capacité de Shannon et imbriqués de sorte à produire des taux d'erreurs proches de 50% pour tout tiers dont le SINR est en deçà du minimum requis pourront être utilisés. Ce codage externe peut ainsi être réalisé à partir de codes polaires ou de codes de Reed-Muller ou encore de tout autre code de même nature.

L'exemple qui suit illustre l'utilisation de codes polaires pour la construction du code externe $C_{ext}$. Cette construction repose sur les éléments suivants. En considérant, comme code externe, deux codes polaires imbriqués de longueur $N = N_{ext,E} = N_{ext,S} = 2^n$ ($c_e$ sous code de $c_b$ mais de longueur égale en entrée et en sortie pour les codes polaires), le rendement du premier code polaire, noté $R_e$, correspond alors au débit cible $R_e N$ pour Eve et le rendement pour le second code polaire, noté $R_b$, correspond alors au débit cible $N. R_b$ pour Bob. On suppose que les utilisateurs légitimes ont un avantage radio sur Eve conduisant à définir des valeurs $R_b$ et $R_e$ ajustées selon les contraintes (8) et (9) en canal gaussien, (10) et (11) en canal général avec $R_e < R_b$, Eve alors peut décoder $N.R_e$ bits et Bob $N.R_b$ bits. Afin d'éviter qu'Eve ne puisse décoder les données utiles (i.e. afin assurer une probabilité d'erreur proche de 0.5 pour Eve sur lesdites données utiles), $N.R_e$ bits aléatoires sans valeur informative seront envoyés sur les meilleures entrées du code externe (que Eve peut décoder), $N. (R_b - R_e)$ bits utiles à protéger sur les meilleures entrées suivantes (que Bob peut décoder mais que Eve ne peut pas décoder) et des bits prédéfinis sur les entrées restantes. Ces entrées d'un code externe polaire peuvent être classées en utilisant le paramètre de Battacharrya, métrique bien connue de l'homme du métier.

La gestion du flux de données injecté dans le code externe sur la base de la construction précédente fera appel aux étapes suivantes :

- Les paramètres Battacharyya sont calculés pour la probabilité cible d'erreur pour Bob, à la sortie du décodeur « interne ». Les meilleures entrées du code externe correspondront aux entrées des paramètres de Battacharrya les plus faibles,
- Les entrées du code externe sont alors classées dans l'ordre croissant de leur paramètre Battacharyya,
- Afin de générer de la confusion au niveau du tiers E, des bits aléatoires sont transmis sur les **N.R$_e$** meilleures entrées du code externe,
- Les bits d'information utiles à protéger sont transmis sur les N. **(R$_b$ - R$_e$)** entrées suivantes,
- Des bits de valeur prédéfinie, par exemple zéro, sont finalement envoyés sur les entrées restantes.

Un autre exemple utilise des codes de Reed Muller pour la construction du code externe C$_{ext}$. Pour la construction d'un code externe utilisant des codes Reed-Muller, le procédé est similaire, à la différence du critère de classement des entrées du code externe. Le procédé exécute les étapes suivantes :

- On calcule les poids de Hamming pour chaque entrée du code externe. Les meilleures entrées sont celles correspondant au poids de Hamming les plus élevés,
- Les entrées sont alors triées par ordre décroissant de leur poids de Hamming,
- Des bits aléatoires sont envoyés sur les **N. R$_e$** meilleures entrées,
- Des bits d'informations sont envoyés sur les **N(R$_b$ - R$_e$)** entrées suivantes,
- Des bits de valeur prédéfinie, par exemple zéro, sont finalement envoyés sur les entrées restantes.

Le procédé selon l'invention peut être mis en œuvre dans un système de communication, où les utilisateurs dialoguent en mode Duplex Temporel employant une même fréquence porteuse pour leurs échanges en émission et en réception, dans les deux sens de transmission, ou à des utilisateurs en mode Duplex fréquentiel employant des fréquences porteuses différentes pour leurs échanges en émission et en réception selon le sens de transmission.

Les étapes du procédé décrites ci-avant s'appliquent, par exemple, pour des signaux émis et reçus dans le cadre d'un protocole de bruit artificiel N$_A$ et de formation de faisceau FF depuis un émetteur A vers un récepteur B. Le protocole de bruit artificiel et de formation de faisceau procurent l'avantage capacitif du canal de transmission selon les définitions, protocoles et formulations suivantes :

- S$_{A,dB}$ : puissance d'émission des signaux utiles par l'émetteur A,
- N$_{A,dB}$ : puissance d'émission de signaux de bruit artificiel par l'émetteur A,
- L$_{A->B,dB}$ : pertes de propagation lors de la transmission de A vers B,
- N'$_{B,dB}$ : niveau de bruit en réception de B,
- NR$_{B,dB}$ : niveau de réjection du bruit artificiels en B par des traitements de formation de faisceau appliqués par A,
- (SIR)$_{A,dB}$ est alors le rapport entre le signal utile et bruit artificiel N$_A$ généré par l'émetteur A, (SIR)$_{A,dB}$ donné par :

$$(SIR)_{A,dB} = S_{A,dB} - N_{A,dB} ,$$

- (SINR)$_{A->B,dB}$ est le rapport entre le signal utile S$_A$ et les bruit + interférence résiduelle en réception par l'utilisateur B après application de la formation de faisceau FF par A. (SINR)$_{A->B,dB}$ est donné par :

$$(SINR)_{A->B,dB} = (S_{A,dB} - L_{A->B,dB})$$
$$- 10.\log_{10}(10^{((N_{A,dB} - NR_{B,dB} - L_{A->B,dB})/10} + 10^{(N'_{B,dB})/10}),$$

- L'avantage radio intrinsèque minimum de B pour la réception de S$_A$ est :

$$ARC = (SINR)_{A->B,dB} - (SIR)_{A,dB}.$$

Selon une autre variante de mise en œuvre, le procédé permet de coder les échanges de données dans un réseau de transmission, utilisant un protocole de communication à émission et réception simultanées, de type Full duplex. Ce protocole d'émission et réception simultanées procure un avantage de capacité relatif à un point E selon les définitions, protocoles et formulations suivantes :

- • A et B sont émetteurs et récepteurs de signaux émis simultanément sur la même fréquence,
- • A et B émettent simultanément des signaux utiles respectivement $S_A$ et $S_B$, de niveaux respectifs $S_{A,dB}$ et $S_{B,dB}$ exprimés en dB, qui auto-interfèrent,
- • A et B reçoivent simultanément les signaux utiles, respectivement $S_B$ et $S_A$, affectés des pertes de transmission, respectivement $L_{B->A,dB}$ de B->A et $L_{A->B,dB}$ de A->B et d'un bruit de réception, respectivement $N'_{A,dB}$ et $N'_{B,dB}$,
- • Les pertes de transmission $L_{A->B,dB}$ de A->B et $L_{B->A,dB}$ de B-> A sont égales par réciprocité du canal,
- • A et B disposent de capacité d'auto-réjection de leurs propres signaux, de niveaux respectifs $RAI_{A->A,dB}$ et $RAI_{B->B,dB}$,
- • E reçoit simultanément les signaux utiles, respectivement $S_B$ et $S_A$, affectés des pertes de transmission, respectivement $L_{B->E,dB}$ de B->E et $L_{A->E,dB}$ de A->E, et d'un bruit de réception $N'_{E,dB}$,
- • Pour le sens de transmission A -> B : émission par A et réception par B du signal $S_A$ de niveau à l'émission $SI_{A,dB}$,

- • rapport entre signal reçu et interférences subies par E sur le signal $S_A$ en raison du signal $S_B$ :

$$(SIR)_{A/E,dB} = S_{A,dB} - L_{A->E,dB} - (S_{B,dB} - L_{B->E,dB})$$

- • rapport signal à bruit + interférence résiduelle en B :

$$(SINR)_{A->B,dB} = (S_{A,dB} - L_{A->B,dB})$$
$$- 10.\log_{10}(10^{(S_{B,dB,dB} - RAI_{B->B,dB})/10}$$
$$+ 10^{(N'_{B,dB})/10}),$$

- • avantage radio a minima de B par rapport à E pour la réception de $S_A$:

$$ARC = ARC_{A->B/EdB} = (SINR)_{A->B,dB} - (SIR)_{A/E,dB},$$

- • Pour le sens de transmission B -> A : émission par B et réception par A du signal $S_B$ de niveau à l'émission $S_{B,dB}$ :

- • rapport entre signal reçu et interférences subies par E sur le signal $S_B$ en raison du signal $S_A$ :

$$(SIR)_{B/E,dB} = S_{B,dB} - L_{B->E,dB} - (S_{A,dB} - L_{A->E,dB}),$$

- • rapport signal à bruit + interférence résiduelle en A :

$$(SINR)_{B->A,dB} = (S_{B,dB} - L_{A->B,dB})$$
$$- 10.\log_{10}(10^{(S_{A,dB,dB} - RAI_{A->A,dB})/10}$$
$$+ 10^{(N'_{A,dB})/10}),$$

- • avantage radio a minima de A par rapport à E pour la réception de $S_B$

$$ARC = ARC_{B->A/EdB} = (SINR)_{B->A,dB} - (SIR)_{B/E,dB}.$$

Le procédé peut aussi être mis en œuvre pour coder des données dans un système où les signaux échangés sont des signaux d'interrogation et d'acquittement, publics ou non, furtifs ou non, auto-interférés ou non, émis et reçus dans le cadre d'un protocole d'identification de systèmes d'émission-réception ou dans le cadre d'un protocole d'authentification d'utilisateurs d'un tel système ou encore dans le cadre d'un protocole de contrôle d'intégrité des messages émis et reçus par un tel système, lesdits protocoles procurant l'avantage capacitif du canal de transmission selon les définitions, protocoles et formulations suivantes :

- A et B sont émetteurs et récepteurs de signaux émis simultanément sur la même fréquence,
- A est émetteur de signaux d'interrogation $SI_A$ et récepteur de signaux d'acquittement émanant de B $SA_B$ ; son niveau de bruit de réception est $N'_{A,dB}$,
- B est émetteur de signaux d'acquittement $SA_B$ et récepteur de signaux d'interrogation émanant de A $SI_A$ ; son niveau de bruit de réception est $N'_{B,dB}$,
- A et B émettent simultanément des signaux de balise de niveaux respectifs $AI_{A,dB}$ et $AI_{B,dB}$, qui auto-interférent ainsi les signaux d'interrogation $SI_A$ et d'acquittement $SA_B$,
- Le mélange des signaux $AI_A$ et $SI_A$ émis par A est de niveau :

$$AI'_{A,dB} = 10.\log_{10}(10^{(AIA,dB/10)} + 10^{(SIA,dB/10)}),$$

- Le mélange des signaux $AI_B$ et $SA_B$ émis par A est de niveau :

$$AI'_{B,dB} = 10.\log_{10}(10^{(AIB,dB/10)} + 10^{(SAB,dB/10)}),$$

- A et B disposent de capacité de réjection des signaux balises de B et A, respectivement $SF_{A/B,dB}$ et $SF_{B/A,dB}$,
- A et B disposent de capacité d'auto-réjection de leurs propres signaux émis (qu'ils connaissent), respectivement $RAI_{A->A,dB}$ et $RAI_{B->B,dB}$,
- Les pertes de transmission $L_{A->B,dB}$ de A->B et $L_{a->A,dB}$ de B->A sont égales par réciprocité du canal,
- Pour le sens de transmission A -> B : émission par A et réception par B du signal d'interrogation de niveau à l'émission $SI_{A,dB}$,

  - rapport entre signal reçu et interférences a minima subies par E sur le signal d'interrogation $SI_A$ en raison du signal $AI_A$ :

$$(SIR)_{A,dB} = SI_{A,dB} - AI_{A,dB},$$

  - rapport signal à bruit + interférences résiduelles en B pour la réception du signal d'interrogation SIA :

$$(SINR)_{A->B,dB} = (SI_{A,dB} - L_{A->B,dB})$$
$$- 10.\log_{10}(10^{((AIA,dB - LA->B,dB - SFB/A,dB)/10}$$
$$+ 10^{(AI'B,dB - RAIB->B,dB)/10})$$
$$+ 10^{(N'B,dB)/10}),$$

  - avantage radio intrinsèque a minima de B pour la réception de $SI_A$

$$ARC = (SINR)_{A->B,dB} - (SIR)_{A,dB},$$

- Pour le sens de transmission B -> A : émission par B et réception par A du signal d'acquittement $SA_{B,dB}$

  - rapport entre signal reçu et interférences a minima subies par E sur le signal d'acquitement $SA_B$ en raison du signal $AI_B$ :

$$(SIR)_{B,dB} = SA_{B,dB} - AI_{B,dB}$$

  - rapport signal à bruit + interférences résiduelles en A pour la réception du signal d'acquitement $SA_B$ :

$$(SINR)_{B\text{->}A,dB} = (SA_{B,dB} - L_{A\text{->}B,dB})$$
$$- 10.\log_{10}(10^{((AIB,dB\ -\ LA\text{->}B,dB\ -\ SFA/B,dB)/10}$$
$$+ 10^{(AI'A,dB\ -\ RAIA\text{->}A,dB)/10})$$
$$+ 10^{(N'A,dB)/10}),$$

- avantage radio intrinsèque a minima de A pour la réception de $S_B$

$$ARC = (SINR)_{B\text{->}A,dB} - (SIR)_{B,dB}.$$

Le procédé selon l'invention est, par exemple, mis en œuvre au sein d'un réseau de radiocommunication, où les émetteurs et les récepteurs sont de type radiocommunication. Il est aussi possible d'utiliser des émetteurs/récepteurs de type acoustique ou optique. Le réseau peut aussi être un réseau de transmission point à point, ou encore un réseau de diffusion avec les émetteurs et récepteurs adaptés.

Le procédé échange entre les utilisateurs des bits protégés en réception, sans divulguer aucune information sur la valeur des bits protégés, selon l'avantage de capacité de canal qu'il estime. Il augmente la sécurité des transmissions de données entre un premier utilisateur et un deuxième utilisateur sans faire appel à un canal auxiliaire vulnérable ou à une clé de chiffrement pouvant être attaqués par un tiers.

## Revendications

1. Procédé de codage univoque des transmissions de données sur un canal de propagation à avantage de capacité, entre un premier utilisateur A comportant au moins un émetteur (16e) et un deuxième utilisateur B comportant au moins un récepteur (26r), les données étant supportées par un signal utile transmis par A, $S_A$, **caractérisé en ce qu'**il comporte au moins les étapes suivantes :

    a) définir préalablement pour chaque utilisateur, le paramètre de rapport signal à interférence à l'émission minimal $(SINR)_{A\text{->}Bmin,dB}$ et le paramètre rapport signal à bruit + interférence à l'émission $(SIR)_{A,dB}$,
    b) mesurer au niveau des récepteurs (26r) les signaux utiles provenant de chaque émetteur (16e) et déterminer la valeur du rapport signal à bruit plus interférence en réception correspondant, $(SINR)_{A\text{->}B,dB}$,
    c) Lorsque $(SINR)_{A\text{->}B,dB} \geq (SINR)_{A\text{->}Bmin,dB}$ évaluer l'avantage radio de canal ARC par :

$$ARC_{dB} = (SINR)_{A\text{->}B,dB}. - (SIR)_{A,dB}$$

    puis, lorsque $ARC_{dB} \geq 0$, évaluer la capacité de transmission dudit canal de transmission $C_{sh}^{(AWGN)}$ et l'avantage de capacité $AC^{(AWGN)}$ induit en canal gaussien par les formulations ci-dessous:

$$C_{sh}^{(AWGN)}((SINR)_{A\text{->}B,dB}) = \log_2[1+10^{((SINR)A\text{->}B,dB)/10}]$$

$$AC^{(AWGN)}((SINR)_{A\text{->}B,dB}\ ;\ (SIR)_{A,dB}) =$$
$$C_{sh}^{(AWGN)}((SINR)_{A\text{->}B,dB}) - \log_2[1+10^{((SIR)A,dB)/10}],$$

    d) Lorsque $(SINR)_{A\text{->}B,dB} \geq (SINR)_{A\text{->}Bmin,dB}$ évaluer l'avantage radio de canal ARC par :

$$ARC_{dB} = (SINR)_{A\text{->}B,dB}. - (SIR)_{A,dB}$$

    puis, lorsque $ARC_{dB} \geq 0$, évaluer la capacité de transmission d'un canal général $C_{sh}^{(général)}$ et de l'avantage de capacité $AC^{(general)}$ induit dans un canal quelconque par les formulations ci-dessous :

$$C_{sh}^{(\text{général})}((SINR)_{A->B,dB}) = Sup_{codages\_SA}\{I(A;B), SINR_{A->B,dB}\},$$

qui est la borne supérieure de l'information mutuelle I(A;B) entre le premier utilisateur A et le deuxième utilisateur B sous l'hypothèse d'un rapport signal à bruit + interférence égal à $SINR_{A->B,dB}$ au niveau de la réception en B, pour tous les codages possibles du signal utile $S_A$,

$$C_{sh}^{(\text{général})}(SIR_{A,dB}) = Sup_{codages\_SA}\{I(A;E), SIR_{A,dB}\},$$

qui est la borne supérieure de l'information mutuelle I(A;E) entre le premier utilisateur A et le tiers E sous l'hypothèse d'un rapport signal à bruit + interférence égal à $SIR_{A,dB}$ au niveau de la réception en E, pour tous les codages possibles du signal utile $S_A$,
puis

$$AC^{(\text{général})}((SINR)_{A->B,dB} \; ; (SIR)_{A,dB}) =$$
$$C_{sh}^{(\text{général})}(SINR_{A->B,dB}) - C_{sh}^{(\text{général})}(SIR_{A,dB})_{dB},$$

e) si l'avantage de capacité est positif en canal gaussien $AC^{(AWGN)}((SINR)_{A.->B,dB} \; ; (SIR)_{A,dB}) > 0$ ou en canal général $AC^{(\text{général})}((SINR)_{A->B,dB} \; ; (SIR)_{A,dB}) > 0$, alors sélectionner un codage interne $C_{int}$ de longueur en entrée $N_{int,E}$ de longueur en sortie $N_{int,S}$ adapté à corriger des erreurs de transmission, et un codage externe $C_{ext}$ de longueur en entrée $N_{ext,E}$ de longueur en sortie $N_{ext,S}$ vérifiant $N_{ext,S} \leq N_{int,E}$ et adapté à la protection des bits sélectionnés,

f) sélectionner au niveau des utilisateurs A et B un ensemble de bits de données à protéger,

g) formater et coder de manière univoque, au niveau de chaque utilisateur, des bits de transmission sélectionnés, en appliquant à l'émission la concaténation du code externe $C_{ext}$ et du code interne $C_{int}$, en complétant à l'émission, lorsque $N_{ext,S} < N_{int,E}$ chaque mot en sortie du code externe $C_{ext}$ par des bits arbitraires prédéfinis et sans valeur informative en nombre $N_{ext,S} - N_{int,E}$, pour constituer des mots de longueur $N_{int,E}$ adaptée à l'entrée du code interne $C_{int}$,

h) utiliser les données numériques issues de la concaténation des codes $C_{ext}$ et $C_{int}$ pour réaliser la transmission des données.

2. Procédé selon la revendication 1 **caractérisé en ce que** l'on utilise un codage externe de longueur en entrée $N_{ext,E}$ constitué de deux codes imbriqués $c_b$ et $c_e$, $c_e$ étant un sous-code de $c_b$, de débits de sortie respectifs $\eta_b$ et $\eta_e$ avec $(\eta_b \geq \eta_e)$, de rendements respectifs $R_b$ et $R_e$ avec $(R_b \geq R_e)$, lesdits codes étant adaptés de manière :

• à vérifier les relations suivantes en canal gaussien :

$$\eta_b \leq C_{sh}^{(AWGN)}((SINR)_{A->B,dB})$$
$$\eta_b - \eta_e \geq {}_{AC}^{(AWGN)}((SINR)_{A->B,dB} \; ; (S_{IR})_{A,dB}),$$

• à vérifier les relations suivantes en canal général :

$$\eta_b \leq C_{sh}^{(\text{général})}((SINR)_{A->B,dB})$$
$$\eta_b - \eta_e \geq AC^{(\text{général})}((SINR)_{A->B,dB} \; ; (S_{IR})_{A,dB}),$$

• à produire un flux binaire protégé en sortie de débit $(R_b - R_e)^*N_{ext,E}$.

3. Procédé selon l'une des revendications 1 ou 2 **caractérisé en ce que** l'on sélectionne les bits de données à coder par les étapes suivantes :

• Classer les $N_{ext,E}$ entrées du code externe $C_{ext}$ en fonction d'un critère caractérisant leur facilité de décodage,
• Envoyer des bits aléatoires sans valeur d'information sur les $R_e^*N_{ext,E}$ meilleures entrées du code externe $C_{ext}$,
• Envoyer les bits contenant l'information à protéger sur les $(R_b-R_e)^*N_{ext,E}$ entrées suivantes,
• Envoyer des bits prédéfinis sur les entrées restantes.

**4.** Procédé selon la revendication 3 **caractérisé en ce que** le critère utilisé est la capacité symétrique des entrées ou leur paramètre de Bhattacharyya ou leur poids de Hamming ou tout autre paramètre caractérisant la facilité ou la difficulté de leur décodage.

**5.** Procédé selon l'une des revendications précédentes **caractérisé en ce que** la définition des paramètres radio de l'étape a) comporte une étape d'étalonnage préalable et un ajustement de la valeur de l'avantage radio ARC selon les étapes suivantes :

• Définir préalablement pour chaque émetteur (16e) de l'utilisateur A des niveaux de puissance d'émission des signaux utiles $S_{A,dB}$ et des niveaux d'interférence contrôlés $I_{A,dB}$ de ces signaux utiles par d'autres signaux émis en même temps que ceux-ci, ces rapports de niveaux étant gérés par un rapport signal à interférence à l'émission, $(SIR)_{A,dB} = S_{A,dB} - I_{A,dB}$,
• Etalonner préalablement les niveaux de bruit de réception pour chaque récepteur (26r) de l'utilisateur B, $N'_{B,dB}$,
• Pour chaque émetteur (16e) et chaque récepteur (26r), étalonner préalablement les niveaux des pertes de propagation de A vers B, $L_{A->B,dB}$ s'appliquant aux signaux utiles $S_{A,dB}$ et aux interférences contrôlées $I_{A,dB}$, définir un seuil maximal $L_{A->Bmax,dB}$ de ces pertes permettant une transmission de bonne qualité de A vers B,
• Pour chaque émetteur (16e) et chaque récepteur (26r), étalonner préalablement les niveaux de rapport signal à bruit + interférence à la réception en B $(SINR)_{A->Bmin,dB}$ pour le seuil de pertes de propagation de A vers B $L_{A->Bmax,dB}$, pour les émissions par A des signaux utiles $S_{A,dB}$ et des interférences contrôlées $I_{A,dB}$ et pour les traitements appliqués sur les signaux $S_A$ en émission par A et en réception par B,
• Pour chaque émetteur (16e) et chaque récepteur (26r), on utilise pour avantage radio, l'avantage radio a minima :

$$ARC_{dB} = ARC_{min,dB} = (SINR)_{A->Bmin,dB} - (SIR)_{A,dB}.$$

**6.** Procédé selon l'une des revendications précédentes **caractérisé en ce que** l'étape b) de la revendication 1 est mise en œuvre en exploitant directement les sorties des traitements appliqués par chaque récepteur (26r) de B pour les besoins propres à la qualité de réception et de démodulation des signaux émis par chaque émetteur (16e) de A.

**7.** Procédé selon l'une des revendications précédentes **caractérisé en ce que** B est muni de capacités d'émission qui lui sont propres, que A est muni de capacités de réception qui lui sont propres, **en ce que** B transmet à A la valeur du rapport signal à bruit plus interférence en réception qu'il mesure, $(SINR)_{A->Bmesuré,dB}$, et **en ce que** A et B prennent pour valeur de l'avantage radio dans les revendications ci-avant la valeur issue des mesures de B, soit :

$$ARC_{dB} = ARC_{mesuré,dB} = (SINR)_{A->Bmesuré,dB} - (SIR)_{A,dB} .$$

**8.** Procédé selon la revendication 7 **caractérisé en ce que** l'utilisateur A transmet à l'utilisateur B sur un canal public le nombre de bits protégés en réception, sans divulguer aucune information sur la valeur des bits protégés, selon l'avantage de capacité canal qu'il estime en fonction de ses ajustements du paramètre $(SIR)_{A,dB}$ et des valeurs du paramètre $(SINR)_{A->Bmesuré,dB}$ que B lui retourne.

**9.** Procédé selon l'une des revendications précédentes **caractérisé en ce que** l'on utilise comme code interne un code correcteur adapté à des canaux de propagation à évanouissement et bruités, choisi parmi la liste suivante : BCH, LDPC, RS, TC, Codes Convolutifs.

**10.** Procédé selon l'une des revendications précédentes **caractérisé en ce que** les utilisateurs échangent selon un mode Duplex Temporel employant une même fréquence porteuse pour leurs échanges en émission et en réception dans les deux sens de transmission ou selon un mode Duplex fréquentiel employant des fréquences porteuses différentes pour leurs échanges en émission et en réception selon le sens de transmission.

**11.** Procédé selon l'une des revendications précédentes **caractérisé en ce qu'**il utilise des signaux émis et reçus dans le cadre d'un protocole de bruit artificiel $N_A$ et formation de faisceau FF depuis un émetteur (16e) vers un récepteur (26r), avec les définitions et formulations suivantes:

- $S_{A,dB}$ : puissance d'émission des signaux utiles par l'émetteur (16e) de l'utilisateur A,
- $N_{A,dB}$ : puissance d'émission de signaux de bruit artificiel par l'émetteur (16e) de A,
- $L_{A\text{->}B,dB}$ : pertes de propagation lors de la transmission de A vers B,
- $N'_{B,dB}$ : niveau de bruit en réception (26r) de B,
- $NR_{B,dB}$ : niveau de réjection du bruit artificiel en B par des traitements de formation de faisceau appliqués par A,
- $(SIR)_{A,dB}$ est alors le rapport entre le signal utile et bruit artificiel $N_A$ généré par l'émetteur (16e), $(SIR)_{A,dB}$ donné par :

$$(SIR)_{A,dB} = S_{A,dB} - N_{A,dB},$$

- $(SINR)_{A\text{->}B,dB}$ est le rapport entre le signal utile $S_A$ et les bruit + interférence résiduelle en réception par l'utilisateur B après application de la formation de faisceau FF par A. $(SINR)_{A\text{->}B,dB}$ est donné par :

$$(SINR)_{A\text{->}B,dB} = (S_{A,dB} - L_{A\text{->}B,dB})$$
$$- 10.\log_{10}(10^{((NA,dB - NRB,dB - LA\text{->}B,dB)/10} + 10^{(N'B,dB)/10}),$$

- L'avantage radio intrinsèque a minima de l'utilisateur B pour la réception de $S_A$ est alors :

$$ARC = (SINR)_{A\text{->}B,dB} - (SIR)_{A,dB}.$$

12. Procédé selon l'une des revendications précédentes **caractérisé en ce qu'**il s'applique des signaux émis et reçus dans le cadre d'un protocole à émission et réception simultané de type Full Duplex, ledit protocole émission et réception simultané procurant l'avantage de capacité relativement à un tiers E selon les définitions et formulations suivantes :

- Le premier utilisateur A et le deuxième utilisateur B sont émetteurs et récepteurs de signaux émis simultanément sur la même fréquence,
- A et B émettent simultanément des signaux utiles respectivement $S_A$ et $S_B$, de niveaux respectifs $S_{A,dB}$ et $S_{B,dB}$ exprimés en dB, qui auto-interfèrent,
- A et B reçoivent simultanément les signaux utiles, respectivement $S_B$ et $S_A$, affectés des pertes de transmission, respectivement $L_{B\text{->}A,dB}$ de B->A et $L_{A\text{->}B,dB}$ de A->B, et d'un bruit de réception, respectivement $N'_{A,dB}$ et $N'_{B,dB}$,
- Les pertes de transmission $L_{A\text{->}B,dB}$ de A->B et $L_{B\text{->}A,dB}$ de B->A sont égales par réciprocité du canal,
- A et B disposent de capacité d'auto-réjection de leurs propres signaux, de niveaux respectifs $RAI_{A\text{->}A,dB}$ et $RAI_{B\text{->}B,dB}$,
- E reçoit simultanément les signaux utiles, respectivement $S_B$ et $S_A$, affectés des pertes de transmission, respectivement $L_{B\text{->}E,dB}$ de B->E et $L_{A\text{->}E,dB}$ de A->E, et d'un bruit de réception $N'_{E,dB}$,
- Pour le sens de transmission A -> B : émission par A et réception par B du signal $S_A$ de niveau à l'émission $SI_{A,dB}$,

. rapport entre signal reçu et interférences subies par E sur le signal $S_A$ en raison du signal $S_B$ :

$$(SIR)_{A/E,dB} = S_{A,dB} - L_{A\text{->}E,dB} - (S_{B,dB} - L_{B\text{->}E,dB}),$$

. rapport signal à bruit + interférence résiduelle en B :

$$(SINR)_{A\text{->}B,dB} = (S_{A,dB} - L_{A\text{->}B,dB})$$
$$- 10.\log_{10}(10^{(SB,dB,dB - RAIB\text{->}B,dB)/10})$$
$$+ 10^{(N'B,dB)/10}),$$

. avantage radio a minima de B par rapport à E pour la réception de $S_A$

$$ARC = ARC_{A->B/EdB} = (SINR)_{A->B,dB} - (SIR)_{A/E,dB},$$

• Pour le sens de transmission B -> A : émission par B et réception par A du signal $S_B$ de niveau à l'émission $S_{B,dB}$

. rapport entre signal reçu et interférences subies par E sur le signal $S_B$ en raison du signal $S_A$ :

$$(SIR)_{B/E,dB} = S_{B,dB} - L_{B->E,dB} - (S_{A,dB} - L_{A->E,dB}),$$

. rapport signal à bruit + interférence résiduelle en A :

$$(SINR)_{B->A,dB} = (S_{B,dB} - L_{A->B,dB})$$
$$- 10.\log_{10}(10^{(SA,dB,dB - RAIA->A,dB)/10})$$
$$+ 10^{(N'A,dB)/10})$$

. avantage radio a minima de A par rapport à E pour la réception de $S_B$

$$ARC = ARC_{B->A/EdB} = (SINR)_{B->A,dB} - (SIR)_{B/E,dB}.$$

13. Procédé selon les revendications précédentes **caractérisé en ce que** les signaux sont des signaux de d'interrogation et d'acquittement, publics ou non, furtifs ou non, auto-interférés ou non, émis et reçus dans le cadre d'un protocole d'identification de systèmes d'émission réception ou dans le cadre d'un protocole d'authentification d'utilisateurs d'un tel système ou dans le cadre d'un protocole de contrôle d'intégrité des messages émis et reçus par un tel système, lesdits protocoles procurant l'avantage de capacité du canal de transmission selon les définitions et formulations suivantes:

• Le premier utilisateur A et le deuxième utilisateur B émettent simultanément des signaux de balise de niveaux respectifs $AI_{A,dB}$ et $AI_{B,dB}$, qui auto-interférent ainsi les signaux d'interrogation $SI_A$ et d'acquittement $SA_B$,
• Le mélange des signaux $AI_A$ et $SI_A$ émis par A est de niveau

$$AI'_{A,dB} = 10.\log_{10}(10^{(AIA,dB/10)} + 10^{(SIA,dB/10)}),$$

• Le mélange des signaux $AI_B$ et $SA_B$ émis par A est de niveau

$$AI'_{B,dB} = 10.\log_{10}(10^{(AIB,dB/10)} + 10^{(SAB,dB/10)}),$$

• A et B disposent de capacité de réjection des signaux balises de B et A, respectivement $SF_{A/B,dB}$ et $SF_{B/A,dB}$,
• A et B disposent de capacités d'auto-réjection de leurs propres signaux émis, respectivement $RAI_{A->A,dB}$ et $RAI_{B->B,dB}$,
• Les pertes de transmission $L_{A->B,dB}$ de A->B et $L_{a->A,dB}$ de B->A sont égales par réciprocité du canal,
• Pour le sens de transmission A -> B : émission par A et réception par B du signal d'interrogation de niveau à l'émission $SI_{A,dB}$,

. rapport entre signal reçu et interférences a minima subies par E sur le signal d'interrogation $SI_A$ en raison du signal $AI_A$ :

$$(SIR)_{A,dB} = SI_{A,dB} - AI_{A,dB}$$

. rapport signal à bruit + interférences résiduelles en B pour la réception du signal d'interrogation $SI_A$ :

$$(SINR)_{A \to B, dB} = (SI_{A,dB} - L_{A \to B, dB})$$
$$- 10.\log_{10}(10^{((AIA,dB \ - \ LA \to B,dB \ - \ SFB/A,dB)/10}$$
$$+ 10^{(AI'B,dB \ - \ RAIB \to B,dB)/10})$$
$$+ 10^{(N'B,dB)/10}),$$

. avantage radio intrinsèque a minima de B pour la réception de $SI_A$

$$ARC = (SINR)_{A \to B, dB} - (SIR)_{A,dB},$$

• Pour le sens de transmission B -> A : émission par B et réception par A du signal d'acquittement $SA_{B,dB}$,

. rapport entre signal reçu et interférences a minima subies par E sur le signal d'acquitement $SA_B$ en raison du signal $AI_B$ :

$$(SIR)_{B,dB} = SA_{B,dB} - AI_{B,dB},$$

. rapport signal à bruit + interférences résiduelles en A pour la réception du signal d'acquitement $SA_B$ :

$$(SINR)_{B \to A, dB} = (SA_{B,dB} - L_{A \to B, dB})$$
$$- 10.\log_{10}(10^{((AIB,dB \ - \ LA \to B,dB \ - \ SFA/B,dB)/10}$$
$$+ 10^{(AI'A,dB \ - \ RAIA \to A,dB)/10})$$
$$+ 10^{(N'A,dB)/10}),$$

. avantage radio intrinsèque a minima de A pour la réception de $S_B$

$$ARC = (SINR)_{B \to A, dB} - (SIR)_{B,dB},$$

**14.** Procédé selon les revendications précédentes **caractérisé en ce que** les étapes des revendications précédentes sont renouvelées d'une transmission à l'autre et renouvelées régulièrement au cours d'une même transmission, lorsqu'un contrôle de puissance est appliqué par le premier utilisateur A ou le deuxième utilisateur B ou lorsque la transmission de A vers B gère par adaptation de débit des fluctuations des pertes de transmissions $L_{A \to B, dB}$.

**15.** Dispositif de codage univoque des transmissions de données sur un canal de propagation à avantage de capacité, entre au moins un premier utilisateur A et au moins un deuxième utilisateur B, un utilisateur comportant au moins un émetteur et un récepteur, les données transmises étant supportées par un signal utile, $S_A$ émis par A dans le sens A->B, $S_B$, émis par B dans le sens B->A, **caractérisé en ce que** chaque utilisateur comporte au moins une unité de calcul adaptée à exécuter les étapes du procédé selon l'une des revendications 1 à 14.

**16.** Dispositif selon la revendication 15 **caractérisé en ce que** les émetteurs (16e, 26e) et les récepteurs (16r, 26r) sont des émetteurs/récepteurs de radiocommunications.

**17.** Dispositif selon la revendication 15 **caractérisé en ce que** les émetteurs (16e, 26e) et les récepteurs (16r, 26r) sont des émetteurs/récepteurs de transmissions acoustiques.

**18.** Dispositif selon la revendication 15 **caractérisé en ce que** les émetteurs (16e, 26e) et les récepteurs (16r, 26r) sont des émetteurs et récepteurs de transmissions optiques.

**19.** Dispositif selon la revendication 15 **caractérisé en ce que** les émetteurs et les récepteurs sont des émetteurs et récepteurs de transmission point à point ou les émetteurs et récepteurs d'un réseau de diffusion.

**Patentansprüche**

1. Verfahren zum eindeutigen Codieren von Datenübertragungen auf einem Ausbreitungskanal mit Kapazitätsvorteil zwischen einem ersten Benutzer A mit wenigstens einem Sender (16e) und einem zweiten Benutzer B mit wenigstens einem Empfänger (26r), wobei die Daten von einem von A übertragenen Nutzsignal, $S_A$, unterstützt werden, **dadurch gekennzeichnet, dass** es wenigstens die folgenden Schritte beinhaltet:

a) im Voraus Definieren, für jeden Benutzer, des Parameters des Signal-Interferenz-Verhältnisses bei der minimalen Sendung $(SINR)_{A->Bmin,dB}$ und des Parameters Signal-Rauschabstand plus Interferenz bei der Sendung $(SIR)_{A,dB}$,

b) Messen, an den Empfängern (26r), der Nutzsignale von jedem Sender (16e) und Bestimmen des Wertes des entsprechenden Signal-Rauschabstands plus Interferenz beim Empfang $(SINR)_{A->B,dB}$,

c) Beurteilen, wenn $(SINR)_{A->B,dB} \geq (SINR)_{A->Bmin,dB}$ ist, des ARC-Kanal-Funkvorteils durch:

$$ARC_{dB} = (SINR)_{A->B,dB} - (SIR)_{A,dB}$$

dann Beurteilen, wenn $ARC_{dB} \geq 0$ ist, der Übertragungskapazität des Übertragungskanals $C_{sh}^{(AWGN)}$ und des Kapazitätsvorteils $AC^{(AWGN)}$, eingeführt im Gaußschen Kanal, durch die folgenden Formulierungen:

$$C_{sh}^{(AWGN)}((SINR)_{A->B,dB}) = \log_2[1 + 10^{((SINR)A->B,dB)/10}]$$

$$AC^{(AWGN)}((SINR)_{A->B,dB} ; (SIR)_{A,dB}) =$$
$$C_{sh}^{(AWGN)}((SINR)_{A->B,dB}) - \log_2[1 + 10^{((SIR)A,dB)/10}],$$

d) Beurteilen, wenn $(SINR)_{A->B,dB} \geq (SINR)_{A->Bmin,dB}$ ist, des ARC-Kanal-Funkvorteils durch:

$$ARC_{dB} = (SINR)_{A->B,dB} - (SIR)_{A,dB}$$

dann Beurteilen, wenn $ARC_{dB} \geq 0$ ist, der Übertragungskapazität eines allgemeinen Kanals $C_{sh}^{(allgemein)}$ und des Kapazitätsvorteils $AC^{(allgemein)}$, eingeführt in einen beliebigen Kanal, durch die folgenden Formulierungen:

$$C_{sh}^{(allgemein)}((SINR_{A->B,dB}) = Sup_{Codierungen\_SA}\{|(A;B), SINR_{A->B,dB}\},$$

der die Obergrenze der gegenseitigen Information I(A;B) zwischen dem ersten Benutzer A und dem zweiten Benutzer B unter der Annahme eines Signal-Rausch-Verhältnisses + Interferenz gleich $SINR_{A->B,dB}$ beim Empfang bei B für alle möglichen Codierungen des Nutzsignals $S_A$ ist,

$$C_{sh}^{(allgemein)}(SINR_{A,dB}) = Sup_{Codierungen\_SA}\{|(A;E), SIR_{A,dB}\},$$

der die Obergrenze der gegenseitigen Information I(A;E) zwischen dem ersten Benutzer A und dem Dritten E unter der Annahme eines Signal-Rauschabstand + Interferenz gleich $SIR_{A,dB}$ beim Empfang bei E ist, für alle möglichen Codierungen des Nutzsignals $S_A$,

dann

$$AC^{(allgemein)}((SINR)_{A->B,dB}; (SIR)_{A,dB)} =$$
$$C_{sh}^{(allgemein)}(SINR_{A->B,dB}) - C_{sh}^{(allgemein)}(SIR_{A,dB})_{dB},$$

e) Auswählen, wenn der Kapazitätsvorteil im Gaußschen Kanal $AC^{(AWGN)}((SINR)_{A->B,dB}; (SIR)_{A,dB} > 0$ oder im allgemeinen Kanal $AC^{(allgemein)}((SINR)_{A->B,dB}; (SIR)_{A,dB}) > 0$ positiv ist, einer internen Codierung $C_{int}$ der Ein-

gangslänge $N_{int,E}$ der Ausgangslänge $N_{int,S}$, ausgelegt zum Korrigieren von Übertragungsfehlern, und einer externen Codierung $C_{ext}$ der Eingangslänge $N_{ext,E}$ der Ausgangslänge $N_{ext,S}$, die $N_{ext,S} \leq N_{int,E}$ verifiziert, und ausgelegt zum Schützen der gewählten Bits,

f) Wählen, an den Benutzern A und B, eines Satzes von zu schützenden Datenbits,

g) Formatieren und eindeutiges Codieren, bei jedem Benutzer, der gewählten Übertragungsbits, wobei die Verkettung des externen Codes $C_{ext}$ und des internen Codes $C_{int}$ auf die Sendung angewendet wird, wobei beim Senden, wenn $N_{ext,S} < N_{int,E}$ ist, jedes Wort am Ausgang des externen Codes $C_{ext}$ durch vordefinierte arbiträre Bits und ohne Informationswert in der Anzahl $N_{ext,S} - N_{int,E}$ vervollständigt wird, um Wörter der Länge $N_{int,E}$, zu bilden, die an die Eingabe des internen Codes $C_{int}$ angepasst sind,

h) Benutzen der digitalen Daten von der Verkettung der Codes $C_{ext}$ und $C_{int}$ zum Realisieren der Übertragung der Daten.

2. Verfahren nach Anspruch 1, **dadurch gekennzeichnet, dass** eine externe Codierung der Eingangslänge $N_{ext,E}$ benutzt wird, gebildet von zwei verschachtelten Codes $c_b$ und $c_e$, wobei $c_e$ ein Subcode von $c_b$ ist, mit jeweiligen Ausgaberaten $\eta_b$ und $\eta_e$ mit ($\eta_b \geq \eta_e$), mit jeweiligen Erträgen $R_b$ und $R_e$ mit ($R_b \geq R_e$), wobei die Codes wie folgt adaptiert sind:

• zum Verifizieren der folgenden Relationen im Gaußschen Kanal:

$$\eta_b \leq C_{sh}^{(AWGN)}((SINR)_{A->B,dB})$$
$$\eta_b - \eta_e \geq AC^{(AWGN)}((SINR)_{A->B,dB} ; (S_{IR})_{A,dB}),$$

• zum Verifizieren der folgenden Relationen im allgemeinen Kanal:

$$\eta_b \leq C_{sh}^{(allgemein)}((SINR)_{A->B,dB})$$
$$\eta_b - \eta_e \geq AC^{(allgemein)}((SINR)_{A->B,dB} ; (S_{IR})_{A,dB}),$$

• zum Produzieren eines geschützten Bitstroms beim Ausgabedurchfluss $(R_b - R_e)*N_{ext,E}$.

3. Verfahren nach Anspruch 1 oder 2, **dadurch gekennzeichnet, dass** die zu codierenden Datenbits mit den folgenden Schritten gewählt werden:

• Klassifizieren der $N_{ext,E}$ Eingänge des externen Codes $C_{ext}$ in Abhängigkeit von einem Kriterium, das deren Decodierungsleichtigkeit charakterisiert,
• Senden von Zufallsbits ohne Informationswert auf den $R_e*N_{ext,E}$ besten Einträge des externen Codes $C_{ext}$,
• Senden der Bits, die zu schützende Information enthalten, auf den $((R_b - R_e)*N_{ext,E}$ folgenden Eingängen,
• Senden der vordefinierten Bits auf den verbleibenden Eingängen.

4. Verfahren nach Anspruch 3, **dadurch gekennzeichnet, dass** das angewendete Kriterium die symmetrische Kapazität der Eingänge oder ihr Bhattacharyya-Parameter oder ihre Hamming-Gewichtung oder ein anderer Paramter ist, der die Leichtigkeit oder Schwierigkeit ihrer Decodierung charakterisiert.

5. Verfahren nach einem der vorherigen Ansprüche, **dadurch gekennzeichnet, dass** die Definition der Funkparameter von Schritt a) einen Vorkalibrierungsschritt und eine Justierung des Wertes des ARC-Funkvorteils gemäß den folgenden Schritten beinhaltet:

• im Voraus Definieren, für jeden Sender (16e) des Benutzers A, der Sendeleistungspegel der Nutzsignale $S_{A,dB}$ und der kontrollierten Interferenzpegel $I_{A,dB}$ dieser Nutzsignale durch andere zur selben Zeit wie diese gesendete Signale, wobei diese Pegelverhältnisse durch ein Signal-Interferenz-Verhältnis bei der Sendung $(SIR)_{A,dB}$ - $S_{A,dB}$ - $I_{A,dB}$ bestimmt werden,
• Vorkalibrieren der Empfangsrauschpegel für jeden Empfänger (26r) des Benutzers B, $N'_{B,dB}$,
• Vorkalibrieren, für jeden Sender (16e) und jeden Empfänger (26r), der Ausbreitungsverlustpegel von A zu B, $L_{A->B,dB}$, die für die Nutzsignale $S_{A,db}$ und die kontrollierten Interferenzen $I_{A,dB}$ gelten, Definieren eines maximalen Schwellenwertes $L_{A->Bmax,dB}$ dieser Verluste, der eine Übertragung guter Qualität von A zu B ermöglicht,
• Vorkalibrieren, für jeden Sender (16e) und jeden Empfänger (26r), der Verhältnispegel Signal-Rauschabstand + Interferenz beim Empfang bei B, $(SINR)_{A->Bmin,dB}$, für den Ausbreitungsverlustschwellenwert von A zu B, $L_{A->Bmax,dB}$, für die Sendungen der Nutzsignale $S_{A,dB}$ durch A und der kontrollierten Interferenzen $I_{A,dB}$ und für die auf die Signale $S_A$ beim Senden durch A und beim Empfang durch B angewendeten Verarbeitungen,

• Benutzen, für jeden Sender (16e) und jeden Empfänger (26r), als Funkvorteil, des minimalen Funkvorteils:

$$ARC_{dB} = ARC_{min.dB} = (SINR)_{A\text{-}>Bmin,dB} \text{-} (SIR)_{A,dB}.$$

6. Verfahren nach einem der vorherigen Ansprüche, **dadurch gekennzeichnet, dass** Schritt b) von Anspruch 1 unter direkter Nutzung der Verarbeitungsausgänge durchgeführt wird, die von jedem Empfänger (26r) von B für die spezifischen Anforderungen an die Empfangs- und Demodulationsqualität der von jedem Sender (16e) von A gesendeten Signale angewendet werden.

7. Verfahren nach einem der vorherigen Ansprüche, **dadurch gekennzeichnet, dass** B über eigene Sendekapazitäten verfügt, dass A über eigene Empfangskapazitäten verfügt, dadurch, dass B zu A den Signal-Rauschabstand-plus-Interferenz-Wert beim Empfang überträgt, das er misst, $(SINR)_{A\text{-}>Bgemessen,dB}$, und dadurch, dass A und B als Wert des Funkvorteils in den obigen Ansprüchen den Wert aus den Messungen von B annimmt, nämlich:

$$ARC_{dB} = ARC_{gemessen,dB} = (SINR)_{A\text{-}>Bgemessen,dB} \text{-} (SIR)_{A,dB}.$$

8. Verfahren nach Anspruch 7, **dadurch gekennzeichnet, dass** Benutzer A zu Benutzer B auf einem öffentlichen Kanal die Anzahl von beim Empfang geschützten Bits überträgt, ohne Informationen über den Wert der geschützten Bits preiszugeben, gemäß dem Kanalkapazitätsvorteil, den er in Abhängigkeit von seinen Justierungen des Parameters $(SIR)_{A,dB}$ und den Werten des Parameters $(SINR)_{A\text{-}>Bgemessen,dB}$ schätzt, die ihm B zurückgibt.

9. Verfahren nach einem der vorherigen Ansprüche, **dadurch gekennzeichnet, dass** als interner Code ein Korrekturcode benutzt wird, angepasst an schwindende und verrauschte Ausbreitungskanäle und ausgewählt aus der folgenden Liste: BCH, LDPC, RS, TC, Faltungscodes.

10. Verfahren nach einem der vorherigen Ansprüche, **dadurch gekennzeichnet, dass** die Benutzer gemäß einem Zeitduplex-Modus mit derselben Trägerfrequenz für ihren Austausch beim Senden und Empfangen in den beiden Übertragungsrichtungen oder gemäß einem Frequenzduplex-Modus mit unterschiedlichen Trägerfrequenzen für ihren Austausch beim Senden und Empfangen gemäß der Übertragungsrichtung austauschen.

11. Verfahren nach einem der vorherigen Ansprüche, **dadurch gekennzeichnet, dass** es Signale verwendet, die im Rahmen eines Protokolls für künstliches Rauschen $N_A$ und Strahlformung FF von einem Sender (16e) zu einem Empfänger (26r) gesendet und empfangen werden, mit den folgenden Definitionen und Formulierungen:

• $S_{A,dB}$: Sendeleistung der Nutzsignale durch den Sender (16e) von Benutzer A,
• $N_{A,dB}$: Sendeleistung von künstlichen Rauschsignalen durch den Sender (16e) von A,
• $L_{A\text{-}>B,dB}$: Ausbreitungsverluste bei der Übertragung von A zu B,
• $N'_{B,dB}$: Rauschpegel beim Empfang (26r) von B,
• $NR_{B,dB}$: Grad der Rückweisung von künstlichem Rauschen bei B durch die von A angewendeten Strahlenformungsverarbeitungen,
• $(SIR)_{A,dB}$ ist dann das Verhältnis zwischen dem Nutzsignal und künstlichem Rauschen $N_A$, erzeugt durch den Sender (16e), $(SIR)_{A,dB}$ wird angegeben durch:

$$(SIR)_{A,dB} = S_{A,dB} \text{-} N_{A,dB},$$

• $(SINR)_{A\text{-}>B,dB}$ ist das Verhältnis zwischen dem Nutzsignal $S_A$ und Rauschen + Restinterferenz beim Empfang durch Benutzer B nach Anwendung der Strahlformung FF durch A, $(SINR)_{A\text{-}>B,dB}$ wird angegeben durch:

$$(SINR)_{A\text{-}>B,dB} = (S_{A,dB} \text{-} L_{A\text{-}>B,dB})$$
$$\text{-} 10.\log_{10}(10^{((NA,dB \text{ - } NRB,dB \text{ - } LA\text{-}>B,dB)/10)} + 10^{(N'B,dB)/10)}),$$

• intrinsischer minimaler Funkvorteil von Benutzer B für den Empfang von $S_A$ ist damit:

$$ARC = (SINR)_{A->B,dB} - (SIR)_{A,dB}.$$

12. Verfahren nach einem der vorherigen Ansprüche, **dadurch gekennzeichnet, dass** es für Signale gilt, die im Rahmen eines gleichzeitigen Sende- und Empfangsprotokolls des Vollduplex-Typs gesendet und empfangen werden, wobei das gleichzeitige Sende- und Empfangsprotokoll den Kapazitätsvorteil gegenüber Dritten E gemäß den folgenden Definitionen und Formulierungen bietet:

• der erste Benutzer A und der zweite Benutzer B sind Sender und Empfänger von gleichzeitig auf derselben Frequenz gesendeten Signalen,

• A und B senden gleichzeitig Nutzsignale $S_A$ bzw. $S_B$ mit jeweiligen Pegeln $S_{A,dB}$ und $S_{B,dB}$, ausgedrückt in dB, die autostörend sind,

• A und B empfangen gleichzeitig die Nutzsignale $S_B$ bzw. $S_A$, die jeweils von Übertragungsverlusten $L_{B->A,dB}$ von B->A und $L_{A->B,dB}$ von A->B und von Empfangsrauschen $N'_{A,dB}$ bzw. $N'_{B,dB}$ betroffen sind,

• die Übertragungsverluste $L_{A->B,dB}$ von A->B und $L_{B->A,dB}$ von B->A sind durch Reziprozität des Kanals gleich,

• A und B haben Autorückweisungskapazität für ihre eigenen Signale mit jeweiligen Pegeln $RAI_{A->A,dB}$ und $RAI_{B->B,dB}$,

• E empfängt gleichzeitig die Nutzsignale $S_B$ bzw. $S_A$, die durch jeweilige Übertragungsverluste $L_{B->E,dB}$ von B->E und $L_{A->E,dB}$ von A->E und Empfangsrauschen $N'_{E,dB}$ betroffen sind,

• für die Übertragungsrichtung A -> B: Senden durch A und Empfang durch B des Signals $S_A$ mit dem Sendepegel $SI_{A,dB}$,

. Verhältnis zwischen empfangenem Signal und Interferenzen, die E auf dem Signal $S_A$ aufgrund des Signals $S_B$ erfährt:

$$(SIR)_{A/E,dB} = S_{A,dB} - L_{A->E,dB} - (S_{B,dB} - L_{B->E,dB}),$$

. Signal-Rauschabstand + Restinterferenz bei B:

$$(SINR)_{A->B,dB} = (S_{A,dB} - L_{A->B,dB})$$
$$- 10.\log_{10}(10^{(SB,dB,dB - RAIB->B,dB)/10}$$
$$+ 10^{(N'B,dB)/10}),$$

. minimaler Funkvorteil von B in Bezug auf E für den Empfang von $S_A$

$$ARC = ARC_{A->B/EdB} = (SINR)_{A->B,dB} - (SIR)_{A/E,dB},$$

• für die Übertragungsrichtung B -> A: Senden durch B und Empfang durch A des Signals $S_B$ mit Sendepegel $S_{B,dB}$

. Verhältnis zwischen empfangenem Signal und Interferenzen, die E auf dem Signal $S_B$ aufgrund des Signals $S_A$ erfährt:

$$(SIR)_{B/E,dB} = S_{B,dB} - L_{N->E,dB} - (S_{A,dB} - L_{A->E,dB}),$$

. dann Signal-Rauschabstand + Restinterferenz bei A:

$$(SINR)_{B->A,dB} = (S_{B,dB} - L_{A->B,dB})$$
$$- 10.\log_{10}(10^{(SA,dB,dB - RAIA->A,dB)/10}$$
$$+ 10^{(N'A,dB)/10}),$$

. minimaler Funkvorteil von A in Bezug auf E für den Empfang von $S_B$

$$ARC = ARC_{B->A/EdB} = (SINR)_{B->A,dB} - (SIR)_{B/E,dB}.$$

13. Verfahren nach einem der vorherigen Ansprüche, **dadurch gekennzeichnet, dass** die Signale Abfrage- und Quittierungssignale sind, öffentlich oder nicht, verdeckt oder nicht, selbststörend oder nicht, gesendet und empfangen im Rahmen eines Identifikationsprotokolls von Sende-Empfangs-Systemen oder im Rahmen eines Protokolls zum Authentifizieren von Benutzern eines solchen Systems oder im Rahmen eines Protokolls zum Überprüfen der Integrität der von einem solchen System gesendeten und empfangenen Nachrichten, wobei die Protokolle den Kapazitätsvorteil des Übertragungskanals gemäß den folgenden Definitionen und Formulierungen bieten:

• der erste Benutzer A und der zweite Benutzer B senden gleichzeitig Bakensignale mit jeweiligen Pegeln $AI_{A,dB}$ und $AI_{B,dB}$, die somit die Abfragesignale $SI_A$ und Quittierungssignale $SA_B$ selbst stören,
• die Mischung der Signale $AI_A$ und $SI_A$, gesendet von A, hat den Pegel

$$AI'_{A,dB} = 10.\log_{10}(10^{(AIA,dB/10)} + 10^{(SIA,dB/10)}),$$

• die Mischung der Signale $AI_B$ und $SI_B$, gesendet durch A, hat den Pegel

$$AI'_{B,dB} = 10.\log_{10}(10^{(AIB,dB/10)} + 10^{(SAB,dB/10)}),$$

• A und B haben Kapazität zum Zurückweisen der Bakensignale von B und A $SF_{A/B,dB}$ bzw. $SF_{B/A,dB}$,
• A und B haben Autorückweisungskapazitäten für ihre eigenen gesendeten Signale $RAI_{A->A,dB}$ bzw. $RAI_{B->B,db}$,
• die Übertragungsverluste $L_{A->B,dB}$ von A->B und $L_{B->A,dB}$ von B->A sind durch Reziprozität des Kanals gleich,
• für die Übertragungsrichtung A -> B: Sendung durch A und Empfang durch B des Abfragesignals mit Sendepegel $SI_{A,dB}$,

. Verhältnis zwischen empfangenem Signal und minimalen Interferenzen, die E auf dem Abfragesignal $SI_A$ aufgrund des Signals $AI_A$ erfährt:

$$(SIR)_{A,dB} = SI_{A,dB} - AI_{A,dB}$$

. Signal-Rauschabstand + Restinterferenzen bei B für den Empfang des Abfragesignals $SI_A$:

$$(SINR)_{A->B,dB} = (SI_{A,dB} - L_{A->B,dB})$$
$$- 10.\log_{10}(10^{(AIA,dB - LA->B,dB - SFB/A,dB)/10}$$
$$+ 10^{(AI'B,dB - RAIB->B,dB)/10})$$
$$+ 10^{(N'B,dB)/10}),$$

. intrinsischer minimaler Funkvorteil von B für den Empfang von $SI_A$

$$ARC = (SINR)_{A->B,dB} - (SIR)_{A,dB},$$

• für die Übertragungsrichtung B -> A: Sendung durch B und Empfang durch A des Quittierungssignals $SA_{B,dB}$,

. Verhältnis zwischen empfangenem Signal und minimalen Interferenzen, die A auf dem Quittierungssignal $SA_B$ aufgrund des Signals $AI_B$ erfährt:

$$(SIR)_{B,dB} = SA_{AB,dB} - AI_{B,dB},$$

. Signal-Rauschabstand + Restinterferenzen bei A für den Empfang des Quittierungssignals $SA_B$:

$$(SINR)_{B->A,dB} = (SA_{B,dB} - L_{A->B,dB})$$
$$- 10.\log_{10}(10^{(AIB,dB - LA->B,dB - SFA/B,dB)/10}$$
$$+ 10^{(AI'A,dB - RAIA->A,dB)/10})$$
$$+ 10^{(N'A,dB)/10}),$$

. intrinsischer minimaler Funkvorteil von A für den Empfang von $S_B$

$$ARC = (SINR)_{B->A,dB} - (SIR)_{B,dB}.$$

**14.** Verfahren nach einem der vorherigen Ansprüche, **dadurch gekennzeichnet, dass** die Schritte der vorherigen Ansprüche von einer Übertragung zur anderen und regelmäßig während derselben Übertragung wiederholt werden, wenn eine Leistungsregelung auf den ersten Benutzer A oder den zweiten Benutzer B angewendet wird oder wenn die Übertragung von A zu B durch Ratenadaption der Schwankungen von Übertragungsverlusten $L_{A->B,dB}$ verwaltet wird.

**15.** Vorrichtung zum eindeutigen Codieren von Datenübertragungen auf einem Ausbreitungskanal mit Kapazitätsvorteil zwischen wenigstens einem ersten Benutzer A und wenigstens einem zweiten Benutzer B, wobei ein Benutzer wenigstens einen Sender und einen Empfänger umfasst, wobei die übertragenen Daten durch ein Nutzsignal, $S_A$ unterstützt werden, das von A in Richtung A->B, $S_B$, und von B in Richtung B->A gesendet wird, **dadurch gekennzeichnet, dass** jeder Benutzer wenigstens eine Recheneinheit umfasst, ausgelegt zum Ausführen der Schritte des Verfahrens nach einem der Ansprüche 1 bis 14.

**16.** Vorrichtung nach Anspruch 15, **dadurch gekennzeichnet, dass** die Sender (16e, 26e) und die Empfänger (16r, 26r) Sender und Empfänger für Funkkommunikation sind.

**17.** Vorrichtung nach Anspruch 15, **dadurch gekennzeichnet, dass** die Sender (16e, 26e) und die Empfänger (16r, 26r) Sender und Empfänger von akustischen Übertragungen sind.

**18.** Vorrichtung nach Anspruch 15, **dadurch gekennzeichnet, dass** die Sender (16e, 26e) und die Empfänger (16r, 26r) Sender und Empfänger von optischen Übertragungen sind.

**19.** Vorrichtung nach Anspruch 15, **dadurch gekennzeichnet, dass** die Sender und die Empfänger Punkt-zu-Punkt-Übertragungssender und -empfänger oder Sender und Empfänger eines Rundfunknetzes sind.

**Claims**

**1.** A method for univocal coding of data transmissions over a propagation channel with capacity advantage, between a first user A comprising at least one transmitter (16e) and a second user B comprising at least one receiver (26r), the data being supported by a useful signal $S_A$ transmitted by A, **characterised in that** it comprises at least the following steps:

a) previously defining, for each user, the minimum transmission signal-to-noise-plus-interference ratio $(SINR)_{A->Bmin,dB}$ and the transmission signal-to-noise-plus-interference ratio $(SIR)_{A,dB}$;
b) measuring, on the receivers (26r), the useful signals originating from each transmitter (16e) and determining the value of the corresponding reception signal-to-noise-plus-interference ratio, $(SINR)_{A->Bmin,dB}$;
c) assessing, when $(SINR)_{A->B,dB} \geq (SINR)_{A->Bmin,dB}$ the radio channel advantage ARC using:

$$ARC_{dB} = (SINR)_{A->B,dB} - (SIR)_{A,dB},$$

then, when $ARC_{dB} \geq 0$, assessing the transmission capacity of said transmission channel $C_{sh}^{(AWGN)}$ and the capacity advantage $AC^{(AWGN)}$ induced on a Gaussian channel using the following formulations:

$$C_{sh}^{(AWGN)}((SINR)_{A\text{->}B,dB}) = \log_2[1 + 10^{((SINR)A\text{->}B,dB)/10}]$$

$$AC^{(AWGN)}((SINR)_{A\text{->}B,dB}; (SIR)_{A,dB}) =$$
$$C_{sh}^{(AWGN)}((SINR)_{A\text{->}B,dB}) - \log_2[1 + 10^{((SIR)A,dB)/10}],$$

d) when $(SINR)_{A\text{->}B,dB} \geq (SINR)_{A\text{->}Bmin,4B,}$ assessing the radio channel advantage ARC using:

$$ARC_{dB} = (SINR)_{A\text{->}B,dB} - (SIR)_{A,dB},$$

then, when $ARC_{dB} \geq 0$, assessing the transmission capacity of a general channel $C_{sh}^{(general)}$ and the capacity advantage $AC^{(general)}$ induced in any channel using the following formulations:

$$C_{sh}^{(general)}((SINR)_{A\text{->}B,dB}) = Sup_{coding\_SA}\{I(A;B), SINR_{A\text{->}B,dB}\},$$

which is the upper limit of the mutual information I(A;B) between the first user A and the second user B assuming a signal-to-noise-plus-interference ratio that is equal to $SINR_{A\text{->}B,dB}$ on reception at B, for all the possible coding of the useful signal $S_A$,

$$C_{sh}^{(general)}(SIR_{A,dB}) = Sup_{coding\_SA}\{I(A;E), SIR_{A,dB}\},$$

which is the upper limit of the mutual information I(A;E) between the first user A and the third party E assuming a signal-to-noise-plus-interference ratio that is equal to $SIR_{A,dB}$ on reception at E, for all possible coding of the useful signal $S_A$,
then

$$AC^{(general)}((SINR_{A\text{->}B,dB}; (SIR)_{A,dB}) =$$
$$C_{sh}^{(general)}(SINR_{A\text{->}B,dB}) - C_{sh}^{(general)}(SIR_{A,dB})_{dB},$$

e) then selecting, if the capacity advantage is positive on a Gaussian channel $AC^{(AWGN)}((SINR)_{a\text{->}B,dB}; (SIR)_{A,dB})> 0$ or on a general channel $AC^{(general)}((SINR)_{A\text{->}B,dB}; (SIR)_{A,dB}) > 0$, an internal code $C_{int}$ with an input length $N_{int,E}$ and an output length $N_{int,S}$ adapted to correct transmission errors, and an external code $C_{ext}$ with an input length $N_{ext,E}$ and an output length $N_{ext,S}$ verifying $N_{ext,S} \leq N_{int,E}$ and adapted to the protection of the selected bits;
f) selecting, from users A and B, a set of data bits to be protected;
g) univocal formatting and coding, on each user, selected transmission bits, by applying, on transmission, the concatenation of the external code $C_{ext}$ and of the internal code $C_{int}$, by completing, on transmission, when $N_{ext,S} < N_{int,E}$, each word output from the external code $C_{ext}$ with predefined random bits and without an informative value by number $N_{ext,S} - N_{int,E}$, in order to constitute words of length $N_{int,E}$ adapted to the input of the internal code $C_{int}$;
h) using the digital data originating from the concatenation of the codes $C_{ext}$ and $C_{int}$ to transmit the data.

2. The method as claimed in claim 1, **characterised in that** an external code with an input length $N_{ext,E}$ is used that is formed by two interleaved codes $c_b$ and $c_e$, with $c_e$ being a sub-code of $c_b$, of respective output rates $\eta_b$ and $\eta_e$, with $(\eta_b \geq \eta_e)$, respective efficients $R_b$ and $R_e$, with $(R_b \geq R_e)$, said codes being adapted so as to:

• verify the following relations in a Gaussian channel:

$\eta_b \leq C_{sh}^{(AWGN)}((SINR)_{A\text{->}B,dB})$
$\eta_{b'} - \eta_e \geq AC^{(AWGN)}((SINR)_{A\text{->}B,dB}; (SIR)_{A,dB});$

• verify the following relations in a general channel:

$$\eta_b \le C_{sh}^{(general)}((SINR)_{A\text{->}B,dB})$$
$$\eta_{b'} - \eta_e \ge AC^{(general)}((SINR)_{A\text{->}B,dB}; (SIR)_{A,dB});$$

• produce a protected binary flow at the output flow $(R_b - R_e)^* N_{ext,E}$.

3. The method as claimed in one of claims 1 or 2, **characterised in that** the data bits to be coded are selected using the following steps:

• classifying the $N_{ext,E}$ inputs of the external code $C_{ext}$ as a function of a criterion characterising their ease of decoding;
• sending random bits without information value over the $R_e^* N_{ext,E}$ best inputs of the external code $C_{ext}$;
• sending the bits containing the information to be protected over the $(R_b - R_e)^* N_{ext,E}$ next inputs;
• sending predefined bits over the remaining inputs.

4. The method as claimed in claim 3, **characterised in that** the criterion that is used is the symmetrical capacity of the inputs or their Bhattacharyya parameter or their Hamming weight or any other parameter characterising the ease or the difficulty of their decoding.

5. The method as claimed in any one of the preceding claims, **characterised in that** the definition of the radio parameters of step a) comprises a prior calibration step and an adjustment of the value of the radio advantage ARC in accordance with the following steps:

• previously defining, for each transmitter (16e) of the user A, transmission power levels for the useful signals $S_{A,dB}$ and controlled interference levels $I_{A,dB}$ of these useful signals by other signals transmitted at the same time as them, with these level ratios being managed by a transmission signal-to-interference ratio $(SIR)_{A,dB} = S_{A,dB} - I_{A,dB}$;
• previously calibrating the reception noise levels for each receiver (26r) of the user, $B,N'_{B,dB}$;
• previously calibrating, for each transmitter (16e) and each receiver (26r), the levels of the propagation losses of A to B, $L_{A\text{->}B,dB}$ being applied to the useful signals $S_{A,dB}$ and to the controlled interference $I_{A,dB}$, defining a maximum threshold $L_{A\text{->}Bmax,dB}$ of these losses allowing good quality transmission from A to B;
• previously calibrating, for each transmitter (16e) and each receiver (26r), the signal-to-noise-plus-interference ratio levels on reception at B $(SINR)_{A\text{->}Bmin,dB}$ for the propagation losses threshold from A to B $L_{A\text{->}Bmax,dB}$, for the transmissions by A of the useful signals $S_{A,dB}$ and of the controlled interference $I_{A,dB}$ and for the processing applied to the signals $S_A$ on transmission by A and on reception by B;
• using, for radio advantage, for each transmitter (16e) and each receiver (26r), the minimum radio advantage:
▪

$$ARC_{dB} = ARC_{min,dB} = (SINR)_{A\text{->}Bmin,dB} - (SIR)_{A,dB}.$$

6. The method as claimed in any one of the preceding claims, **characterised in that** step b) of claim 1 is implemented by directly using the outputs of the processing applied by each receiver (26r) of B for the requirements that are specific to the reception and demodulation quality of the signals transmitted by each transmitter (16e) of A.

7. The method as claimed in any one of the preceding claims, **characterised in that** B is provided with transmission capacities specific thereto, A is provided with reception capacities specific thereto, **in that** B sends A the value of the reception signal-to-noise-plus-interference ratio that it measures, $(SINR)_{A\text{->}Bmeasured,dB}$, and **in that** A and B assume, as a value of the radio advantage in the aforementioned claims, the value originating from the measurements of B, that is:

$$ARC_{dB} = ARC_{measured,dB} = (SINR)_{A\text{->}Bmeasured,dB} - (SIR)_{A,dB}.$$

8. The method as claimed in claim 7, **characterised in that** the user A sends the user B, over a public channel, the number of protected bits on reception, without disclosing any information relating to the value of the protected bits, according to the channel capacity advantage that it estimates as a function of its adjustments of the parameter (SIR)$_{A,dB}$ and of the values of the parameter (SINR)$_{A\text{->}B\text{measured},dB}$ that B returns thereto.

9. The method as claimed in any one of the preceding claims, **characterised in that** a corrector code is used as an internal code that is adapted to fading and noisy propagation channels, selected from the following list: BCH, LDPC, RS, TC, Convolutive Codes.

10. The method as claimed in any one of the preceding claims, **characterised in that** the users exchange in accordance with a Temporal Duplex mode using the same carrier frequency for their transmission and reception exchanges in both transmission directions or in accordance with a Duplex frequency mode using different carrier frequencies for their transmission and reception exchanges according to the direction of transmission.

11. The method as claimed in any one of the preceding claims, **characterised in that** it uses signals transmitted and received within the context of an artificial noise protocol N$_A$ and beam formation FF from a transmitter (16e) to a receiver (26r), with the following definitions and formulations:

   - S$_{A,dB}$: transmission power of the useful signals by the transmitter (16e) of the user A;
   - N$_{A,dB}$: transmission power of artificial noise signals by the transmitter (16e) of A;
   - L$_{A\text{->}B,dB}$: propagation losses during the transmission from A to B;
   - N'$_{B,dB}$: reception noise level (26r) of B;
   - NR$_{B,DB}$: rejection level of the artificial noise at B by the beam formation processing applied by A;
   - (SIR)$_{A,dB}$ is then the ratio between the useful signal and the artificial signal N$_A$ generated by the transmitter (16e), (SIR)$_{A,dB}$ provided by:

$$(SIR)_{A,dB} = S_{A,dB} - N_{A,dB};$$

   - (SINR)$_{A\text{->}B,dB}$ is the ratio between the useful signal S$_A$ and the noise-plus-residual interference on reception by the user B following the application of the beam formation FF by A; (SINR)$_{A\text{->}B,dB}$ is provided by:

$$(SINR)_{A\text{->}B,dB} = (S_{A,dB} - L_{A\text{->}B,dB}),$$
$$- 10.\log_{10}(10^{((NA,dB\, -\, NRB,dB\, -\, LA\text{->}B,dB)/10}} + 10^{(N'B,dB)/10});$$

   - the minimum intrinsic radio advantage of the user B for the reception of S$_A$ is then:

$$ARC = (SINR)_{A\text{->}B,dB} - (SIR)_{A,dB}.$$

12. The method as claimed in any one of the preceding claims, **characterised in that** it is applicable to the signals transmitted and received within the context of a simultaneous transmission and reception protocol of the Full Duplex type, said simultaneous transmission and reception protocol providing the capacity advantage relative to a third party E according to the following definitions and formulations:

   - the first user A and the second user B are transmitters and receivers of signals simultaneously transmitted over the same frequency;
   - A and B simultaneously transmit useful signals, respectively S$_A$ and S$_B$, with respective levels S$_{A,dB}$ and S$_{B,dB}$ expressed in dB, which self-interfere;
   - A and B simultaneously receive the useful signals, respectively S$_B$ and S$_A$, affected by transmission losses, respectively L$_{B\text{->}A,dB}$ of B->A and L$_{A\text{->}B,dB}$ of A->B, and a reception noise, respectively N'$_{A,dB}$ and N'$_{B,dB}$;
   - the transmission losses L$_{A\text{->}B,dB}$ of A->B and L$_{B\text{->}A,dB}$ of B->A are equal by channel reciprocity;
   - A and B have self-rejection capacity of their own signals, respective levels RAI$_{A\text{->}A,dB}$ and RAI$_{B\text{->}B,dB}$;
   - E simultaneously receives the useful signals, respectively S$_B$ and S$_A$, affected by transmission losses, respectively L$_{B\text{->}E,dB}$ of B->E and L$_{A\text{->}E,dB}$ of A->E, and a reception noise N'$_{E,dB}$;
   - for the transmission direction A -> B: transmission by A and reception by B of the level signal S$_A$ on transmission SI$_{A,dB}$;
   ratio between received signal and interference experienced by E on the signal S$_A$ due to the signal S$_B$:

$$(SIR)_{A/E,dB} = S_{A,dB} - L_{A\text{->}E,dB} - (S_{B,dB} - L_{B\text{->}E,dB});$$

signal-to-noise-plus-residual interference ratio at B:

$$(SINR)_{A\text{->}B,dB} = (S_{A,dB} - L_{A\text{->}B,dB})$$
$$- 10.\log_{10}(10^{(SB,dB,dB - RAIB\text{->}B,dB)/10}$$
$$+ 10^{(N'B,dB)/10});$$

minimum radio advantage of B relative to E for the reception of $S_A$,

$$ARC = ARC_{A\text{->}B/EdB} = (SINR)_{A\text{->}B,dB} - (SIR)_{A/E,dB};$$

• for the transmission direction B -> A: transmission by B and reception by A of the level signal $S_B$ on transmission $S_{B,dB}$;
ratio between received signal and interference experienced by E on the signal $S_B$ due to the signal $S_A$:

$$(SIR)_{B/E,dB} = S_{B,dB} - L_{B\text{->}E,dB} - (S_{A,dB} - L_{A\text{->}E,dB});$$

signal-to-noise-plus-residual interference ratio at A:

$$(SINR)_{B\text{->}B,dB} = (S_{B,dB} - L_{A\text{->}B,dB})$$
$$- 10.\log_{10}(10^{(SA,dB,dB - RAIA\text{->}A,dB)/10}$$
$$+ 10^{(N'A,dB)/10});$$

minimum radio advantage of A relative to E for the reception of $S_B$

$$ARC = ARC_{B\text{->}A/EdB} = (SINR)_{B\text{->}A,dB} - (SIR)_{B/E,dB}.$$

13. The method as claimed in the preceding claims, **characterised in that** the signals are interrogation and acknowledgement signals, which may or may not be public, may or may not be furtive, and may or may not be self-interfered, transmitted and received within the context of an identification protocol for transmission/reception systems or within the context of an authentication protocol for users of such a system or within the context of a protocol for controlling the integrity of the messages transmitted and received by such a system, said protocols providing the capacity advantage of the transmission channel according to the following definitions and formulations:

• the first user A and the second user B simultaneously transmit scanning signals of respective levels $AI_{A,EdB}$, which thus self-interfere the interrogation $SI_A$ and acknowledgement $SA_B$ signals;
• the mix of signals $AI_A$ and $SI_A$ transmitted by A is of level:

$$AI'_{A,dB} = 10.\log_{10}(10^{(AIA,dB/10)} + 10^{(SIA,db/10)});$$

• the mix of signals $AI_B$ and $SA_B$ transmitted by A is of level:

$$AI'_{B,dB} = 10.\log_{10}(10^{(AIB,dB/10)} + 10^{(SIB,db/10)});$$

• A and B have the capacity to reject scanning signals of B and A, respectively $SF_{A/B,db}$ and $SF_{B/A,db}$;
• A and B have capacities to self-reject their own transmitted signals, respectively $RAI_{A\text{->}A,db}$ and $RAI_{B\text{->}B,db}$;
• the transmission losses $L_{A\text{->}B,db}$ of A->B and $L_{B\text{->}A,db}$ of B->A are equal by channel reciprocity;

• for the direction of transmission A -> B: transmission by A and reception by B of the level interrogation signal on transmission $SI_{A,db}$;
ratio between received signal and minimum interference experienced by E on the polling signal $SI_A$ due to the signal $AI_A$:

$$(SIR)_{A,db} = SI_{A,db} - AI_{A,db};$$

signal-to-noise-plus-residual interference at B for the reception of the interrogation signal $SI_A$:

$$(SINR)_{A\text{->}B,db} = (SI_{A,db} - L_{A\text{->}B,db})$$
$$- 10.\log_{10}(10^{(AIA,dB - LA\text{->}B,dB - SFB/A,dB)/10}$$
$$+ 10^{(AI'B,dB - RAIB\text{->}B,dB)/10})$$
$$+ 10^{(N'B,dB)/10});$$

minimum intrinsic radio advantage of B for the reception of $SI_A$

$$ARC = (SINR)_{A\text{->}B,dB} - (SIR)_{A,dB};$$

• for the direction of transmission B -> A: transmission by B and reception by A of the acknowledgement signal $SA_{B,dB}$;
ratio between received signal and minimum interference experienced by E on the acknowledgement signal $SA_B$ due to the signal $AI_B$:

$$(SIR)_{B,dB} = SA_{B,dB} - AI_{B,dB};$$

signal-to-noise-plus-residual interference at A for the reception of the acknowledgement signal $SA_B$:

$$(SINR)_{B\text{->}A,dB} = (SA_{B,dB} - L_{A\text{->}B,dB})$$
$$- 10.\log_{10}(10^{(AIB,dB - LA\text{->}B,dB - SFA/B,dB)/10}$$
$$+ 10^{(AI'A,dB - RAIA\text{->}A,dB)/10})$$
$$+ 10^{(N'A,dB)/10});$$

minimum intrinsic radio advantage of A for the reception of $S_B$,

$$ARC = (SINR)_{B\text{->}A,dB} - (SIR)_{B,dB}.$$

14. The method as claimed in the preceding claims, **characterised in that** the steps of the preceding claims are renewed from one transmission to the next and are regularly renewed during the same transmission, when a power control is applied by the first user A or the second user B or when the transmission from A to B manages, by adapting the rate, fluctuations of the transmission losses $L_{A\text{->}B,dB}$.

15. A device for univocal coding data transmissions over a propagation channel with capacity advantage, between at least one first user A and at least one second user B, with a user comprising at least one transmitter and one receiver, the transmitted data being supported by a useful signal $S_A$, transmitted by A in the direction A -> B, $S_B$, transmitted by B in the direction B -> A, **characterised in that** each user comprises at least one computation unit adapted to execute the steps of the method as claimed in any one of claims 1 to 14.

16. The device as claimed in claim 15, **characterised in that** the transmitters (16e, 26e) and the receivers (16r, 26r) are radio communication transmitters/receivers.

17. The device as claimed in claim 15, **characterised in that** the transmitters (16e, 26e) and the receivers (16r, 26r) are acoustic transmission transmitters/receivers.

18. The device as claimed in claim 15, **characterised in that** the transmitters (16e, 26e) and the receivers (16r, 26r) are optical transmission transmitters/receivers.

19. The device as claimed in claim 15, **characterised in that** the transmitters and receivers are point-to-point transmission transmitters and receivers or the transmitters and receivers of a broadcasting network.

**FIG.1**

I   ———▶ Transmet et reçoit

II  — — ▶ Enregistre et/ou analyse

III ·········▶ Emet le cas échéant

**FIG.2**

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Explicit capacity-achieving coding scheme for the Gaussian wiretap channel. **TYAGI HIMANSHU et al.** 2014 IEEE International Symposium On Information Theory. IEEE, 29 Juin 2014, 956-960
- From ordinary AWGN codes to optimal MIMO wiretap schemes. **KHINA ANATOLY.** 2014 IEEE information theory workshop (ITW 2014). IEEE, 02 Novembre 2014, 631-635

- Polar coding schemes for the AWGN channel. 2011 IEEE International Symposium on Information Theory Proceedings (ISIT 2011). IEEE, 31 Juillet 2011, 194-198